# EUROPÄISCHE PATENTSCHRIFT

(11) **EP 3 426 362 B1**
(45) Veröffentlichungstag und Bekanntmachung des Hinweises auf die Patenterteilung: **04.05.2022**
(21) Anmeldenummer: 17721515.9
(22) Anmeldetag: 09.03.2017
(51) Int. Cl.: A63B 71/06, A63B 69/36, G09B 19/00, H04M 1/725, A63B 24/00

(54) **SIGNALVORRICHTUNG UND GERÄT**
SIGNALING DEVICE AND APPARATUS
DISPOSITIF DE SIGNALISATION ET APPAREIL ASSOCIÉ

(30) Priorität: 11.03.2016 DE 102016003067; 13.10.2016 DE 102016119546
(43) Veröffentlichungstag der Anmeldung: 16.01.2019
(73) Patentinhaber: Knab, Niklas, 67583 Guntersblum (DE)
(72) Erfinder: Knab, Niklas, 67583 Guntersblum (DE)
(74) Vertreter: Sebastian, Jens
(86) Internationale Anmeldenummer: PCT/DE2017/100189
(87) Internationale Veröffentlichungsnummer: WO 2017/152914

(56) Entgegenhaltungen:
- WO-A1-95/11730
- WO-A1-2009/034189
- DE-A1- 3 741 927
- US-A1- 2013 079 172
- US-A1- 2015 057 112

## Beschreibung

Die Erfindung betrifft eine Signalvorrichtung für ein Schlaggerät wie ein Tennisschläger, ein Golfschläger, einer Person, einer Bekleidung der Person oder dergleichen, zur Signalerzeugung bei einer Bewegung der Signalvorrichtung gemäß Anspruch

Weiter betrifft die Erfindung ein Gerät oder ein Bekleidungsstück, insbesondere ein Schlaggerät, zum Durchführen einer Bewegung wie ein Tennisschläger, ein Golfschläger, eine Tischtennisschläger, ein Baseballschläger oder ein Sportbekleidungsstück, gemäß Anspruch 2. Zudem betrifft die Erfindung ein Verfahren zum Erlernen oder Verbessern von Bewegungsabläufen, insbesondere zum Erlernen oder Verbessern von Körperhaltungen oder Schlagbewegungen, gemäß Anspruch 3. Darüber hinaus betrifft die Erfindung eine Verwendung einer erfindungsgemäßen Vorrichtung zum Erlernen oder Verbessern von Bewegungsabläufen gemäß Anspruch 5.

Auch betrifft die Erfindung ein Computerprogramm umfassend Programmcodemittel zum Durchführen eines erfindungsgemäßen Verfahrens gemäß Anspruch 6.

Weiter betrifft die Erfindung ein Computerprogrammprodukt umfassend Programmcodemittel, die auf einem computerlesbaren Medium gespeichert sind, um ein erfindungsgemäßes Verfahren durchzuführen, wenn das Programm in einem Computer läuft, gemäß Anspruch 7.

Nicht zuletzt betrifft die Erfindung ein System zum Erlernen oder Verbessern von Bewegungsabläufen, gemäß Anspruch 8.

Aus dem Stand der Technik sind allgemein Signalvorrichtungen zum Erlernen eines Schlags, Schwungs oder einer Bewegung mit einem entsprechenden Schlaggerät wie einem Tennisschläger oder einem Golfschläger bekannt. Derartige Signalvorrichtungen lassen sich lösbar an dem entsprechendem Schlaggerät anbringen und geben je nach Ausführung des Schlags ein akustisches Signal ab.

Aus der US 5,340,102 A ist eine Pfeife bekannt, die einen ersten Pfeifton bei korrekt ausgeführter Vor- oder Rückhandbewegung und einen zweiten Pfeifton bei ausgeführter Topspin-Bewegung erzeugt. Der Resonanzkörper ist hier in Schlagrichtung zeigend als beidseitig offener Zylinder mit einem Schwingungserzeuger an einem Ende ausgeführt und ist in der Haltevorrichtung pivotierend angebracht. Der Ton wird hier in Abhängigkeit der Schlägerneigung und nicht in Abhängigkeit einer Spinbewegung erzeugt. Das Erzeugen des Pfeiftons ist somit unabhängig von dem Luftstrom in Y-Richtung.

Aus der DE 37 41 927 A1 ist eine Pfeife für die Befestigung an Sportgeräten, wie Schlägern bekannt. Diese weist einen Körper mit einer Durchtrittsausnehmung durch diesen hindurch auf und vermag einen Pfeifton als Folge der Luftströmung durch die Durchtrittsausnehmung hindurch zu erzeugen. Der Körper weist eine Haltevorrichtung für das lösbare Halten der Pfeife an einem Sportgerät auf, wobei die Durchtrittsausnehmung in gewissem Grade zu der Bewegungsrichtung des Sportgeräts ausgerichtet ist, um die Umgebungsluft durch die Durchtrittsausnehmung zu drücken und einen Pfeifton zu erzeugen, wenn das Sportgerät in einem Schlagbogen, insbesondere das Sportgerät in Richtung Ball geschwungen wird, also ein Zuschlag erfolgt, geschwungen wird. Die Pfeife ist als Trainingshilfe für die Entwicklung audiomuskulärer Koordination zur Verbesserung der Schlagausführung ausgelegt. Bei der bekannten Pfeife steht deren Resonanzkörper mit zwei Öffnungen in akustischer Wirkverbindung. Die eine Öffnung weist in Schlagrichtung, die andere Öffnung in die entgegengesetzte Richtung. Beide Öffnungen sind mit trichterförmigen Lufteinlässen versehen. Mit dieser Pfeife lassen sich nur Vorhandbewegungen und Rückhandbewegungen unbeachtlich der korrekten Topspin-Technik üben, da hier nur das fester Zuschlagen zum erfolgreichen Ton führt.

Weiter sind aus dem Stand der Technik Videoanalysegeräte und andere Analysegeräte zum Korrigieren und/oder Analysieren von Bewegungsabläufen allgemein bekannt.

Aus der US 9,358,442 A1 ist ein Tennisschläger mit einem Messsystem bekannt. Das Messsystem umfasst einen an dem Tennisschläger angebrachten Sensor zur Erfassung von Bewegungsabläufen. Weiter werden mehrere Bewegungsabläufe analysiert, um mögliche Abweichungen festzustellen. Das angewendete Verfahren ist für eine nachträgliche Analyse ausgebildet. Ein unmittelbares Feedback über eine Ausgabeeinheit ist nicht offenbart.

Aus der US 2005/0288119 A1 ist ein Golfschläger mit Sensor bekannt, bei dem in Echtzeit Daten erfasst werden. Die Ausgabe der erfassten Daten bzw. einer Auswertung der erfassten Daten erfolgt nachträglich optisch über ein Display.

Aus der WO 2009/034189 A1 ist ein Trainingsgerät zum Trainieren einer vordefinierten Bewegung mit einem Sportinstrument, wie einem Tennisschläger, einem Baseballschläger, einem Golfschläger und dergleichen bekannt, umfassend Überwachungsmittel zur Registrierung der tatsächlichen Bewegung des Instruments, Speichermittel zur Speicherung wobei die Bewegungs- und Rückkopplungsmittel dazu dienen, einem Benutzer der Vorrichtung Informationen bezüglich der Differenz und / oder Korrespondenz der Bewegung in Bezug auf die vordefinierte Bewegung zu liefern, wobei die Vorrichtung in einem Gehäuse vorgesehen ist, das abnehmbar an dem Sportinstrument angebracht oder an diesem anbringbar ist.

Aus der US 2015/057112 A1 sind eine Vorrichtung, ein Verfahren und ein System bekannt, um den Schwung eines Athleten zu verbessern, indem drei Phasen eines Schwungs - der Rückschwung, der Vorlauf und der Nachlauf - erfasst werden und bestimmt wird, ob ein Ballaufprall oder die höchste Geschwindigkeit zwischen den Phasen aufgetreten ist, wobei ein Trägheitsmessgeräts verwendet wird, das an einem Sportgerät befestigt ist, ohne das Sportgerät des Athleten durch Veränderung des Gewichts, der Balance oder der Struktur des Geräts zu belasten.

Aus der WO 95/11730 A1 sind ein Verfahren und eine Einrichtung für eine sensorische Kontrolle von Bewegungsabläufen bekannt, wobei eine Information des Probanden auf akustischem Weg erfolgt. Gekennzeichnet ist die Einrichtung durch mindestens einen mit dem zu prüfenden Körperteil verbindbaren Bewegungsablaufs-Sensor mit zumindest einer über einen Teilabschnitt des Bewegungsablaufes zeitkontinuierlicher Signalabgabe an eine Signalsendeeinheit, und durch mindestens eine mit Sensor und Sendeeinheit über eine Signalübertragungsstrecke signalfluss-verbundene Signal-Verarbeitungs- und - Umwandlungseinrichtung mit akustischer Ausgabeeinheit.

Aus der US 2013/079172 A1 ist ein Golfschläger oder -gerät bekannt, umfassend einen Griffbereich, einen Kopf und einen Schaft, der den Griffbereich mit dem Kopf verbindet. Eine Verkleidung kann an einer Hinterkante des Schafts angebracht werden und / oder eine Oberflächenbehandlung, wie beispielsweise eine Vertiefung, wird auf den Schaft aufgebracht. Die Verkleidung und / oder Oberflächenbehandlung kann den mit dem Schaft verbundenen Widerstand während einer Schwenkbewegung des Schlägers oder des Arbeitsgeräts verringern. Die Verkleidung kann sich, bei Anbringung, entlang eines Teils des Schafts von einer Stelle in der Nähe des Kopfes des Schlägers oder des Arbeitsgeräts erstrecken.

Aus der DE 37 41927 A1 ist eine Pfeife für das Befestigen an Sportgeräten, die durch die Luft geschwungen werden, um einen Ball zu treffen,bekannt, wobei die Pfeife aufweist: einen Körper mit einer Durchtrittsausnehmung, die durch diesen hindurch verläuft, einen Einlass zu der Durchtrittsausnehmung und einen Auslass von der Durchtrittsausnehmung, eine Ausgestaltung in der Durchtrittsausnehmung, mit welcher ein Pfeifton als Ergebnis eines Luftstroms zwischen dem Einlass und dem Auslass erzeugbar ist, und eine Haltevorrichtung auf dem Körper, die mit den Sportgeräten derart in Eingriff bringbar ist, dass der Körper lösbar mit dem Gerät in einer Ausrichtung verbunden ist, dass sich der Einlass mindestens teilweise quer zu der Bewegungsrichtung des Sportgeräts erstreckt, wenn das Sportgerät in einem Schlag-Spielbogen bei der Anwendung geschwungen wird.

Derartige Analysegeräte erlauben entweder nur eine nachträgliche Korrektur eines Bewegungsablaufs (beispielsweise Videoanalyse) oder erzeugen ein für die Schulung des Topspin nicht relevantes oder zu unspezifisches Geräusch, welches mechanische durch die Bewegung erzeugt wird und somit nicht nachträglich mehr analysierbar ist.

Es ist eine Aufgabe der vorliegenden Erfindung, eine Signalvorrichtung und ein Gerät zu schaffen, welche eine verbesserte Funktion und eine verbesserte Gestaltung aufweisen und dem Komfort verbessern. Es ist weiter eine Aufgabe der vorliegenden Erfindung, ein Verfahren, eine Vorrichtung, eine Verwendung, ein Computerprogramm, ein Computerprogrammprodukt und ein System zu schaffen, bei welchem ein Echtzeit-Feedback an einen Benutzer erfolgt, wobei das Feedback auch nachträglich noch abrufbar oder auswertbar ist und welche somit eine verbesserte Funktion und eine verbesserte Gestaltung aufweisen und den Komfort verbessern.

Diese und weitere Aufgaben werden gelöst durch eine Signalvorrichtung nach Anspruch 1, ein Gerät oder ein Bekleidungsstück nach Anspruch 2, ein Verfahren nach Anspruch 4, eine Verwendung nach Anspruch 5, ein Computerprogramm nach Anspruch 6, ein Computerprogrammprodukt nach Anspruch 7 und ein System nach Anspruch 8.

Vorteilhafte Weiterbildungen der Erfindung sind in den abhängigen Ansprüchen angegeben oder werden nachstehend im Zusammenhang mit der Beschreibung der Figuren angegeben.

Die Erfindung schließt die technische Lehre ein, dass bei einer Signalvorrichtung, insbesondere einer Signalvorrichtung für ein Schlaggerät wie ein Tennisschläger, ein Golfschläger oder dergleichen, zur Signalerzeugung bei einer Bewegung der Signalvorrichtung, umfassend einen Resonanzkörper und eine Halteeinrichtung, wobei der Resonanzkörper und die Halteeinrichtung miteinander verbunden oder miteinander verbindbar ausgebildet sind, um den Resonanzkörper über die Halteeinrichtung an einem Schlaggerät oder dergleichen zu befestigen, wobei der Resonanzkörper weiter einen Hohlraum zur Erzeugung eines akustischen Signals bei einer Bewegung aufweist, vorgesehen ist, dass der Resonanzkörper eine einzige Öffnung aufweist, welche mit dem Hohlraum in fluidischer Wirkverbindung steht und über welche der Hohlraum mit der Umgebung fluidisch verbunden ist. Der Resonanzkörper kann beliebig geformt sein. Vorzugsweise ist der Resonanzkörper rotationssymmetrisch um zumindest eine Achse ausgebildet, vorzugsweise um eine Längsachse. Der Resonanzkörper ist vorzugsweise kuppelartig ausgebildet. Dabei ist der Resonanzkörper von einem Boden oder Bodenbereich kuppelförmig in eine Richtung ausgebildet. In dem Resonanzkörper ist ein Hohlraum ausgebildet. Der Hohlraum ist vorzugsweise rotationssymmetrisch um eine Längsachse ausgebildet. Vorzugsweise ist der Hohlraum im Wesentlichen zylindrisch ausgebildet. Umgeben ist der Hohlraum von einer Wandung des Resonanzkörpers und dem Boden des Resonanzkörpers. Der Resonanzkörper weist eine einzige Öffnung auf, mit welcher die Umgebung des Resonanzkörpers und der Hohlraum des Resonanzkörpers fluidisch miteinander verbunden sind. Die Öffnung ist vorzugsweise an der Spitze des kuppelartigen Resonanzkörpers ausgebildet. Insbesondere ist die Öffnung als Langloch ausgebildet. Gegenüber der Öffnung liegt der Boden. Der Boden ist vorzugsweise öffnungsfrei ausgebildet. In einer Ausführungsform sind an dem kuppelartigen Resonanzkörper mehrere Öffnungen vorgesehen, wohingegen der Boden öffnungsfrei ausgebildet ist. Durch die entfernt von dem Boden ausgebildeten Öffnungen lässt sich in Verbindung mit dem Hohlraum und dem geschlossenen Boden ein akustisches Signal bei Bewegung der Signalvorrichtung realisieren. Die Signalvorrichtung wird so ausgerichtet, dass die einzige Öffnung quer zu einer Bewegung ausgerichtet ist, die signalisiert werden soll. Insbesondere ist die Öffnung im Wesentlichen senkrecht zu der zu signalisierenden Bewegung angeordnet, sodass ein Überströmen der Öffnung erfolgt, wodurch aufgrund des überströmten Resonanzraums ein Ton erzeugt wird. Hierdurch unterscheidet sich die erfindungsgemäße Signalvorrichtung wesentlich von den bekannten Lösungen, die allenfalls einen Signalton aufgrund einer Durchströmung erzielen. Durch die Ausführung als Resonanzkörper mit nur einer Resonanzkörperöffnung wird bei unterschiedlich schnellen Bewegungen bzw. Anströmgeschwindigkeiten ein "Überblas"-Effekt, wie er beispielsweise aus der Musik durch verstärktes Anblasen von Blasinstrumenten zur Ausnutzung der Naturtöne bekannt ist. Dabei werden mittels der erfindungsgemäßen Signalvorrichtung entsprechend nicht nur ein einzelner Ton, sondern verschiedene Töne in Abhängigkeit einer Anströmgeschwindigkeit erzeugt. Durch Ausnutzung der Naturtöne lassen sich mehrere Signale unterschiedlicher Frequenzen erzeugen, welche eine verbesserte Rückkopplung für den Nutzer bieten. Die Signalvorrichtung weist lediglich Teile auf, die nicht kippbar, drehbar oder anders relativ zu der Umgebung, beispielsweise mittels Gelenken, Lagern etc. verdreh- und/oder verschwenkbar sind. Die Signalvorrichtung ist somit frei von relativ zueinander verschwenk- und/oder verdrehbaren und/oder von verschiebbaren Bauteilen. Vorzugsweise ist die Signalvorrichtung einteilig ausgebildet.

Die Signalvorrichtung umfasst einen Resonanzkörper und eine Halteeinrichtung, wobei der Resonanzkörper und die Halteeinrichtung miteinander verbunden oder miteinander verbindbar ausgebildet sind, um den Resonanzkörper über die Halteeinrichtung an einem Schlaggerät oder dergleichen zu befestigen, wobei der Resonanzkörper weiter einen Hohlraum zur Erzeugung eines akustischen Signals bei einer Bewegung aufweist, wobei der Resonanzkörper eine einzige Öffnung aufweist, welche mit dem Hohlraum in fluidischer Wirkverbindung steht und über welche der Hohlraum mit der Umgebung fluidisch verbunden ist. Die Signalvorrichtung umfasst in einer Ausführungsform einen Resonanzkörper, der mit einer Halteeinrichtung verbunden ist. In einer anderen Ausführungsform sind zwei Resonanzkörper mit der Halteeinrichtung verbunden. Die Haltereinrichtung kann einteilig ausgeführt sein. In einer anderen Ausführungsform ist die Haltereinrichtung mehrteilig, beispielsweise zweiteilig ausgeführt. Weist die Signalvorrichtung zwei Resonanzkörper auf, sind diese etwa um 180° gedreht zueinander an der Haltevorrichtung angeordnet. Das heißt, die jeweiligen Öffnungen der Resonanzkörper liegen an entgegengesetzten Enden des Resonanzkörpers. Auf diese Weise ist eine Signalvorrichtung mit zwei Resonanzkörpern vorgesehen. Bei Anwendung an einem Tennisschläger, insbesondere bei einer Klemmung zwischen den Seiten der Bespannung eines Tennisschlägers ragen die auf jeder Seite etwa in einem Winkel von 90°, im Wesentlichen aber quer zu der von der Bespannung aufgespannten Fläche oder Ebene, weg. Somit ist durch eine doppelte Ausführung der Erfindung gewährleistet, dass der Spiel-Komfort zunimmt.

In einer Ausführungsform ist vorgesehen, dass der Resonanzkörper an einer Endseite einen den Hohlraum begrenzenden Boden aufweist. Der Boden ist in einer Ausführungsform einteilig mit dem Resonanzkörper ausgebildet. In einer anderen Ausführungsform sind Boden und Resonanzkörper separat ausgebildet und vorzugsweise miteinander verbunden, vorzugweise unlösbar. Die Verbindung kann stoffschlüssig, kraftschlüssig und/oder formschlüssig erfolgen. Der Boden ist vorzugsweise aus dem gleichen Material wie der Resonanzkörper hergestellt. In einer anderen Ausführungsform ist der Boden aus einem anderen Material wie der Resonanzkörper hergestellt.

In einer anderen Ausführungsform ist vorgesehen, dass die Halteeinrichtung an dem Boden angeordnet ist. Die Halteeinrichtung ist vorzugsweise integriert an und/oder in dem Boden ausgebildet, beispielsweise als Nut. Der Boden ist hierzu aus einem elastischen Material ausgebildet, so das ein Lösen und wieder befestigen mehrfach möglich ist. Andere Ausführungsformen von Halteeinrichtungen sind denkbar, beispielsweise Clips, Klammern oder dergleichen. Im Bereich der Nut weist die Haltereinrichtung in einer Ausführungsform einen anderen Querschnitt bzw. eine andere Querschnittsform als in dem an die Nut anschließenden Teil oder in den an die Nut anschließenden Teile auf. So weist die Halteeinrichtung im Bereich der Nut beispielsweise einen im Wesentlichen rechteckigen oder quadratischen Querschnitt auf. Dagegen ist der in eine Längsrichtung oder Längserstreckung anschließende Teil mit einem kreisförmigen oder ovalen Querschnitt ausgebildet. Der Querschnitt des Teils zwischen dem Bereich der Nut und dem Resonanzkörper kann beispielsweise ebenfalls kreisförmig oder oval ausgebildet sind, kann aber auch einen anderen Querschnitt aufweisen. Im Bereich der Nut ist somit ein Verbindungsteil ausgebildet, der einen Bodenplattenteil der Halteeinrichtung mit dem den Boden des Resonanzkörpers bildenden Teils der Halteeinrichtung verbindet. Das oder der Verbindungsteil ist so ausgebildet, dass dieser ein Verdrehen der Signalvorrichtung insgesamt zumindest größtenteils verhindert. Die Halteeinrichtung ist vorzugsweise elastisch ausgebildet. Der Verbindungsteil ist vorzugsweise so ausgebildet, dass dieser sich zwischen zumindest den gängigen Saitenabständen eines Tennisschlägers an diese anpassen kann. Der Verbindungsteil sitzt somit in einer betriebsbereiten Position oder einer Gebrauchsposition eingeklemmt zwischen den benachbarten Tennissaiten.

Eine weitere Ausführungsform sieht vor, dass die Öffnung an der anderen Endseite gegenüber dem Boden angeordnet ist. Der Boden ist öffnungsfrei, somit geschlossen ausgebildet. Der Resonanzkörper weist mindestens eine Öffnung auf. Vorzugsweise ist die Öffnung entfernt von dem Boden, somit an der Spitze des Resonanzkörpers ausgebildet. Die Öffnung weist einen in Richtung der Längsachse konstanten Querschnitt auf. Über den Querschnitt der Öffnung ist ein akustisches Signal einstellbar.

Wiederum eine weitere Ausführungsform sieht vor, dass ein Öffnungsquerschnitt der Öffnung zumindest um eine sich von der einen Endseite zu der anderen Endseite erstreckende Längsachse rotationsasymmetrisch ausgebildet ist. Vorzugsweise ist die Öffnung bzw. der Öffnungsquerschnitt spiegelsymmetrisch ausgebildet, beispielsweise in Form eines Langlochs.

Auch ist in einer Ausführungsform vorgesehen, dass der Resonanzkörper und/oder der Hohlraum zumindest um die Längsachse rotationssymmetrisch ausgebildet ist/sind.

Weiter sieht eine Ausführungsform vor, dass der Mittelpunkt der Öffnung und/oder des Öffnungsquerschnitts auf der Längsachse liegt. Der Querschnitt der Öffnung in Längsrichtung ist vorzugsweise konstant und nicht trichterförmig ausgebildet.

Zudem ist in einer Ausführungsform vorgesehen, dass der Öffnungsquerschnitt und/oder die Öffnung als Langloch ausgebildet ist/sind.

Noch eine weitere Ausführungsform sieht vor, dass der Hohlraum ein Hohlvolumen und der Resonanzkörper ein Resonanzvolumen aufweisen und das Volumenverhältnis von Hohlvolumen und Resonanzvolumen in einem vorgegebenen Verhältnis zueinander ausgebildet sind, welches auf einen Schlaggeschwindigkeitsbereich abgestimmt ist. Der Schlaggeschwindigkeitsbereich richtet sich nach dem Können des jeweiligen Spielers. Trainierte Spieler schlagen mit einer höheren Schlaggeschwindigkeit, also in einem höheren Schlaggeschwindigkeitsbereich. Untrainierte Spieler schlagen mit einer geringeren Schlaggeschwindigkeit, also in einem niedrigeren Schlaggeschwindigkeitsbereich. Hier ist jedoch nicht die Zuschlag-Geschwindigkeit entscheidend, sondern die Schlägerspitzengeschwindigkeit in der relevanten Richtung um den Drehpunkt (Hand). Die Volumina sind über die Wahl von Parametern des Resonanzkörpers einstellbar. Parameter, die zum Einstellen der Volumina herangezogen werden können, sind beispielsweise der Krümmungsradius der Kuppel der Pfeife, die Länge zwischen Boden des Resonanzkörpers und dem Langloch, somit der Höhe des Hohlraums und der Radius des Resonanzkörpers (bzw. der Dicke des Resonanzkörpers.

Weiter schließt die Erfindung die technische Lehre ein, dass bei einem Gerät, insbesondere einem Schlaggerät, zum Durchführen einer Bewegung wie einem Schwung oder einem Schlag, beispielsweise wie mit einem Tennisschläger, einem Golfschläger, einem Tischtennisschläger, einem Baseballschläger oder dergleichen, vorgesehen ist, dass das Gerät mindestens eine vorstehend beschrieben Signalvorrichtung aufweist. Bevorzugt ist das Schlaggerät als Tennisschläger ausgebildet.

Bei einer Anordnung der Signalvorrichtung an einem Tennisschläger, genauer zwischen Seiten der Bespannung, liegt die Öffnung in einer Ebene, die parallel zu der von den Seiten aufgespannten Ebene liegt. Dabei wird während einer Schlagbewegung etwa senkrecht zu der Öffnung und somit auch zu der von der Bespannung aufgespannten Ebene kein Signal erzeugt. Erst bei ausreichender Schrägstellung, oder Abweichung der Schlagbewegung in Y-Richtung -wobei die X-Richtung der Richtung für gerades Zuschlagen ohne Spin entspricht, wird ein Signal aufgrund der Überströmung der Öffnung erzeugt.

Die Erfindung schließt auch die technische Lehre eine, dass bei einer Vorrichtung zum Erlernen und/oder Verbessern von Bewegungsabläufen, insbesondere zum Erlernen und/oder Verbessern von Körperhaltungen und/oder Schlagbewegungen, umfassend mindestens eine erfindungsgemäße, hier beschriebene Signalvorrichtung.

In einer Ausführungsform ist vorgesehen, dass die Vorrichtung zum Erlernen und/oder Verbessern von Bewegungsabläufen, insbesondere zum Erlernen und/oder Verbessern von Körperhaltungen und/oder Schlagbewegungen, umfasst: mindestens einen Sensor zum Erfassen mindestens eines Teils einer Bewegung (Ist oder Soll oder beides), mindestens einen Speicherbereich zum Definieren eines Sollbewegungsablaufs und/oder einer zulässigen Abweichung von einem Sollbewegungsablauf, mindestens einen Speicherbereich zum Ablegen des mittels des mindestens einen Sensors zu erlernenden oder zu verbessernden Ist-Bewegungsablaufs, mindestens einen Vergleichsbereich zum Vergleichen des Ist-Bewegungsablaufs mit dem Sollbewegungsablauf und wobei die Signalvorrichtung als eine Ausgabeeinheit zum Ausgeben mindestens eines Signals in Abhängigkeit von einer Abweichung des Ist-Bewegungsablaufs von dem Sollbewegungsablauf ausgebildet ist, wobei die Ausgabeeinheit und/oder die Bereiche derart ausgebildet sind, dass eine Ausgabe des Signals während des Bewegungsablaufs erfolgt, sodass eine Rückkopplung auf den Ist-Bewegungsablauf ggf. noch während des Bewegungsablaufs erfolgt und/oder wobei die Ausgabeeinheit und/oder die Bereiche derart ausgebildet sind, dass das ausgegebene Signal in Abhängigkeit von einer Abweichung des Ist-Bewegungsablaufs von dem Sollbewegungsablauf zumindest hinsichtlich Intensität, Zeit und/oder Frequenz variiert.

In einer Ausführungsform ist vorgesehen, dass die Vorrichtung weiter ein erfindungsgemäßes, hier beschriebenes Gerät und/oder ein erfindungsgemäßes, hier beschriebenes Bekleidungsstück umfasst. Der Begriff Bekleidungsstück umfasst sämtliche auf der Haut tragbare Kleidung einschließlich auf der Haut aufbringbare, Träger für eine Signalvorrichtung, somit auch Pflaster, Tapes oder dergleichen

Auch schließt die Erfindung die technische Lehre ein, dass bei einem Verfahren zum Erlernen und/oder Verbessern von (Ist-) Bewegungsabläufen, insbesondere zum Erlernen und/oder Verbessern von Körperhaltungen und/oder Schlagbewegungen, die Schritte umfasst sind: Vorsehen mindestens einer erfindungsgemäßen, hier beschriebenen Signalvorrichtung und Ausgeben mindestens eines Signals in Abhängigkeit von dem Ist-Bewegungsablauf, wobei eine Ausgabe des Signals während des Bewegungsablaufs erfolgt, sodass eine Rückkopplung auf den Ist-Bewegungsablauf ggf. noch während des Bewegungsablaufs erfolgt und/oder wobei das ausgegebene Signal in Abhängigkeit von der Ist-Bewegung zumindest hinsichtlich Intensität, Zeit und/oder Frequenz variiert wird und/oder Vorsehen eines Sensors zum Erfassen mindestens eines Teils einer Bewegung, Definieren eines Sollbewegungsablaufs und/oder einer zulässigen Abweichung von einem Sollbewegungsablauf, Erfassen des zu erlernenden oder zu verbessernden Ist-Bewegungsablaufs mittels des mindestens einen Sensors, Vergleich des Ist-Bewegungsablaufs mit dem Sollbewegungsablauf und Ausgabe mindestens eines Signals in Abhängigkeit von einer Abweichung des Ist-Bewegungsablaufs von dem Sollbewegungsablauf, wobei die Ausgabe des Signals während des Bewegungsablaufs erfolgt, sodass eine Rückkopplung auf den Ist-Bewegungsablauf ggf. noch während des Bewegungsablaufs erfolgt und/oder wobei das ausgegebene Signal in Abhängigkeit von einer Abweichung des Ist-Bewegungsablaufs von dem Sollbewegungsablauf zumindest hinsichtlich Intensität, Zeit und/oder Frequenz variiert.

Die Erfindung schließt insbesondere die technische Lehre ein, dass bei einem Verfahren zum Erlernen und/oder Verbessern von Bewegungsabläufen, insbesondere zum Erlernen und/oder Verbessern von Körperhaltungen und/oder Schlagbewegungen, vorgesehen ist, dass dieses die Schritte umfasst: Vorsehen mindestens eines Sensors zum Erfassen mindestens eines Teils einer Bewegung, Definieren eines Sollbewegungsablaufs und/oder einer zulässigen Abweichung von einem Sollbewegungsablauf, Erfassen des zu erlernenden oder zu verbessernden Ist-Bewegungsablaufs mittels des mindestens einen Sensors, Vergleich des Ist-Bewegungsablaufs mit dem Sollbewegungsablauf und Ausgabe mindestens eines Signals in Abhängigkeit von einer Abweichung des Ist-Bewegungsablaufs von dem Sollbewegungsablauf, wobei die Ausgabe des Signals während des Bewegungsablaufs erfolgt, sodass eine Rückkopplung auf den Ist-Bewegungsablauf noch während des Bewegungsablaufs erfolgt und ggf. eine Korrektur während des Bewegungsablaufs vorgenommen werden kann, bzw. unmittelbar danach bewertet und angepasst werden kann und/oder wobei das ausgegebene Signal in Abhängigkeit von einer Abweichung des Ist-Bewegungsablaufs von dem Sollbewegungsablauf zumindest hinsichtlich Intensität, Zeit und/oder Frequenz variiert.

In einer Ausführungsform der Erfindung ist vorgesehen, dass der mindestens eine Sensor an dem den Bewegungsablauf ausführenden Subjekt angeordnet wird.

In einer anderen Ausführungsform der Erfindung ist vorgesehen, dass der Grad der Abweichungen des Ist-Bewegungsablaufs von dem Soll-Bewegungsablauf mittels unterschiedlicher Signale ausgegeben wird.

In einer Ausführungsform ist vorgesehen, dass der mindestens eine Sensor zur Befestigung an dem den Bewegungsablauf ausführenden Subjekt ausgebildet ist.

In einer weiteren Ausführungsform ist vorgesehen, dass die mindestens eine Ausgabeeinheit und/oder die Bereiche derart ausgebildet sind, dass der Grad der Abweichungen des Ist-Bewegungsablaufs von dem Soll-Bewegungsablauf mittels unterschiedlicher Signale ausgebbar ist.

Auch schließt die Erfindung die technische Lehre ein, dass eine Verwendung einer erfindungsgemäßen, hier beschriebenen Signalvorrichtung, eines erfindungsgemäßen, hier beschriebenen Geräts und/oder Bekleidungsstücks, einer erfindungsgemäßen, hier beschriebenen Vorrichtung und/oder eines erfindungsgemäßen, hier beschriebenen Verfahrens zum Erlernen und/oder Verbessern von Bewegungsabläufen, insbesondere zum Erlernen und/oder Verbessern von Körperhaltungen und/oder Schlagbewegungen, wobei insbesondere ein Feedback zu einer Abweichung eines Ist-Bewegungsablaufs zu einem Sollbewegungsablaufs noch während des Bewegungsablaufs erfolgt.

Insbesondere schließt die Erfindung die technische Lehre ein, dass eine Verwendung eines erfindungsgemäßen Verfahrens und/oder einer erfindungsgemäßen Vorrichtung zum Erlernen und/oder Verbessern von Bewegungsabläufen, insbesondere zum Erlernen und/oder Verbessern von Körperhaltungen und/oder Schlagbewegungen vorgesehen ist, wobei insbesondere ein Feedback zu einer Abweichung eines Ist-Bewegungsablaufs zu einem Sollbewegungsablaufs noch während des Bewegungsablaufs erfolgt, insbesondere aufgrund elektronisch oder elektrisch erfasster und/oder erzeugter Signale.

Darüber hinaus schließt die Erfindung die technische Lehre ein, dass ein Computerprogramm vorgesehen ist, umfassend Programmcodemittel zum Durchführen aller Schritte gemäß des erfindungsgemäßen Verfahrens, wenn das Programm auf einem Computer ausgeführt wird.

Daneben schließt die Erfindung die technische Lehre ein, dass ein Computerprogrammprodukt vorgesehen ist, umfassend Programmcodemittel, die auf einem computerlesbaren Medium gespeichert sind, um das erfindungsgemäße Verfahren durchzuführen, wenn das Programm in einem Computer läuft.

Nicht zuletzt schließt die Erfindung die technische Lehre ein, dass bei einem System zum Erlernen und/oder Verbessern von Bewegungsabläufen, insbesondere zum Erlernen und/oder Verbessern von Körperhaltungen und/oder Schlagbewegungen, umfassend Mittel zur Durchführung des erfindungsgemäßen, hier beschriebenen Verfahrens und/oder eine erfindungsgemäße, hier beschriebene Signalvorrichtung und/oder eines erfindungsgemäßen, hier beschriebenen Geräts oder Bekleidungsstücks und/oder einer erfindungsgemäße, hier beschriebene Vorrichtung, sowie ein erfindungsgemäßes, hier beschriebenes Computerprogramm und/oder Computerprogrammprodukt, wobei der durchgeführte Bewegungsablauf mittels eines an einem Schlaggerät wie einem Tennisschläger, einem Golfschläger oder einem anderen Sportschläger oder Sportgerät oder an einem Kleidungsstück oder einem Benutzer angebrachten Sensor erfasst wird und ein in Abhängigkeit von dem mittels Sensor erfassten Bewegungsablauf generiertes akustisches Signal während des Bewegungsablaufs ausgegebene wird, so dass auditorische Re-afferenzen verfügbar gemacht werden, die dann als Online-Feedback genutzt werden können.

Insbesondere schließt die technische Lehre ein, dass bei einem System zum Erlernen und/oder Verbessern von Bewegungsabläufen, insbesondere zum Erlernen und/oder Verbessern von Körperhaltungen und/oder Schlagbewegungen, vorgesehen ist, dass das Mittel zur Durchführung des erfindungsgemäßen Verfahrens und/oder eine erfindungsgemäße Vorrichtung, sowie ein Computerprogramm und/oder ein Computerprogrammprodukt umfasst sind, wobei der durchgeführte Bewegungsablauf mittels eines an einem Tennisschläger, einem Golfschläger oder einem anderen Sportschläger oder Sportgerät oder an einem Kleidungsstück oder einem Benutzer angebrachten Sensor erfasst wird und ein akustisches Signal während des Bewegungsablaufs ausgegebene wird, so dass auditorische Re-afferenzen verfügbar gemacht werden, die dann als Online-Feedback genutzt werden können.

Der Bewegungsablauf oder die Bewegungsabläufe können beliebige Bewegungsabläufe sein. Beispielsweise ist ein Bewegungsablauf eine Abfolge von mindestens zwei Körperhaltungen, beispielsweise bei einem Sprung, bei einem Laufen oder dergleichen. In einer anderen Ausführungsform ist ein Bewegungsablauf eine komplexere Bewegung wie bei einem mittels Schläger durchgeführten Schlag, beispielsweise einem Tennisschlag, einem Golfschlag, einem Eishockeyschuss oder dergleichen.

Für die Erfassung eines Bewegungsablaufs, somit zumindest von mindestens zwei Körperhaltungen zu unterschiedlichen Zeitpunkten, ist mindestens ein Sensor vorgesehen. Der Sensor ist ausgebildet, einen Bewegungsablauf zu erfassen. Hierzu ist der Sensor in einer Ausführung als ein Beschleunigungssensor ausgebildet. Dieser erfasst beispielsweise eine durch den Sensor erfahrene Beschleunigung. Deshalb ist der Sensor vorzugsweise an einer Stelle angeordnet, an welcher der Bewegungsablauf erfasst werden soll. Beispielsweise ist zum Erfassen eines Sprungs der Sensor zumindest an einem Körperteil des Benutzers und/oder an dessen Kleidung angebracht, beispielsweise an einem Kopf, einem Arme, einem Bein oder dergleichen. In einer anderen Ausführungsform ist der Sensor an und/oder in einem Schläger, beispielsweise in einem Tennisschlägerrahmen, in einem Golfschlägerkopf oder dergleichen angeordnet. Der Sensor ist dabei derart angeordnet, dass er die Bewegung nicht beeinträchtigt. Vorzugsweise ist bei einem Anbringen an einem Schläger oder dergleichen eine Tariereinheit vorgesehen, welche eine ungewollte Gewichtsabweichung durch den Sensor austariert. Vorzugsweise ist der Sensor möglichst schwerpunktnah an einem Schläger oder Schlaggerät angeordnet.

In einer Ausführungsform ist ein Sensor vorgesehen. In einer anderen Ausführungsform sind mehrere Sensoren vorgesehen. Bei Vorsehen mehrerer Sensoren sind die Sensoren vorzugsweise gleich ausgebildet. In einer anderen Ausführungsform sind die Sensoren zumindest teilweise unterschiedliche ausgebildet.

Statt eines Bewegungssensors oder zusätzlich lassen sich andere geeignete Sensoren vorsehen. Beispielsweise ist in einer Ausführungsform ein Inertialsensor vorgesehen. Ein solcher Inertialsensor ist zur Bestimmung seiner Lage im Raum ausgebildet. Dieser umfasst in einer Ausführungsform einen Magnetfeldsensor, einen Beschleunigungssensor und ein Gyroskop. Mittels des Gyroskops ist eine Rotationsmessung möglich.

Weitere Sensoren können ergänzend oder alternativ Drucksensoren, Lagesensoren, Formsensoren, Dehnungsstreifen, Piezokristallstreifen, Druckverteilungsfolien oder dergleichen sein. Es lassen sich unterschiedliche Arten von Sensoren vorsehen.

Mindestens ein Sensor ist vorzugsweise mittels einer Dämpfungseinheit an dem Schlaggerät angeordnet, um ungewollte Vibrationen des Sensors zu verringern. Auf diese Weise ist der Sensor vor Vibrationen geschützt, welche die Erfassung von Bewegungen, Geschwindigkeiten, Beschleunigungen etc. verfälschen könnten. In einer anderen Ausführungsform lässt sich der Sensor als ein Vibrationsdämpfer für Tennisschläger und dergleichen ausbilden. Diese lässt sich dann einfach in das Saitenbild des Tennisschlägers anordnen.

Um einem Nutzer ein Feedback hinsichtlich des ausgeführten Bewegungsablaufs oder Ist-Bewegungsablauf von einem Sollbewegungsablauf zu vermitteln, insbesondere in Echtzeit zu vermitteln, ist ein Sollbewegungsablauf definiert. Der Sollbewegungsablauf ist vorzugsweise in einem Speicherbereich zum Definieren eines Sollbewegungsablaufs und/oder einer zulässigen Abweichung von einem Sollbewegungsablauf abgelegt und von diesem auch abrufbar. Zur Definition eines Sollbewegungsablaufs wird dieser in einer Ausführungsform programmiert oder aus einem Speicher abgerufen und in den Speicherbereich übertragen. In einer anderen Ausführungsform wird der Sollbewegungsablauf durch einen ausgewählten Benutzer per Durchführung des Sollbewegungsablaufs durchgeführt. Insofern ist zwischen einem Erfassungsmodus, in welchem der Ist-Bewegungsablauf erfasst wird, und einem Definitionsmodus, in welchem der Soll-Bewegungsablauf vorgegeben oder definiert wird, umschaltbar. Der Soll-Bewegungsablauf wird vorzugsweise mittels Vektordaten vorgegeben bzw. definiert.

Zur Definition des Soll-Bewegungsablauf wird zunächst eine Eichung, Kalibrierung und/oder eine Referenzpunkt- oder Lagebestimmung durchgeführt. Bei einer Kalibrierung wird beispielsweise ein Soll-Bewegungsablauf durchgeführt und geprüft, ob der Sensor auch die Daten zu dem Soll-Bewegungsablauf erfasst. Beispielsweise kann ein Soll-Bewegungsablauf zur Kalibrierung mit einer Geschwindigkeit von 100 km/h durchgeführt werden. Es wird dann geprüft, ob der Sensor die Geschwindigkeit korrekt erfasst. Falls nicht, wird der Sensor neu kalibriert. Zur Lagebestimmung bzw. Referenzpunktbestimmung wird der Benutzer oder das Schlaggerät in eine Referenzposition bewegt. Bei einem Schlaggerät wird dieses zum Beispiel auf den Boden gelegt. So kann ein Tennisschläger flach auf den Boden gelegt werden, um eine Referenzlage zu bestimmen. Durch die Referenzlage wird ein Koordinatensystem für den Sensor bzw. die Vorrichtung festgelegt, sodass Bewegungsdaten in Bezug auf dieses festgelegte Koordinatensystem erfasst und/oder programmiert oder definiert werden können. Alle Bewegungsdaten lassen sich dann relativ zu der ursprünglichen Lage des Schlägers/ Benutzers / Sportgeräts erfassen oder definieren. Sobald der Benutzer und/oder der Schläger die Referenzlage eingenommen hat, wird diese Lage durch den Sensor oder die Sensoren erfasst, beispielsweise durch ein Signal. Das Signal kann beispielsweise über einen Knopf, per Sprachbefehl oder auf andere beliebige Weise ausgelöst werden. In Abhängigkeit von der Referenzlage kann ein Sollbewegungsablauf definiert werden. Nimmt beispielsweise ein Schlaggerät beim Hinlegen auf einen ebenen Boden eine bevorzugte Stellung oder Lage ein, so wird in einer Ausführungsform die Sollbewegung in Abhängigkeit von dieser bevorzugten Lage vorgegeben, beispielsweise durch Relativbezüge zu dieser Referenzlage. Die Daten des Ist-Bewegungsablaufs werden vorzugsweise in Vektordaten abgelegt oder gespeichert. Der Soll-Ist-Vergleich zwischen Soll- und Ist-Bewegungsablauf erfolgt bevorzugt anhand der hinterlegten Vektordaten.

Der Sensor ist zur Datenübermittlung ausgebildet. Beispielsweise ist der Sensor zur drahtlosen Datenübertragung ausgebildet. Entsprechend überträgt der Sensor die erfassten Daten an einen Speicherbereich, einen Vergleichsbereich und/oder eine andere Einheit. In anderen Ausführungsformen sind der Sensor und die anderen Einheiten integriert ausgebildet und es erfolgt eine verdrahtete Übertragung. Beispielsweise lässt sich so die Vorrichtung mit einem Mobiltelefon oder einer anderen mobilen oder stationären Auswerteeinheit (Laptop, PC) drahtgebunden und/oder drahtlos verbinden.

Nach Einrichtung des Sollbewegungsablaufs wird in den Erfassungsmodus umgeschaltet, sodass die Vorrichtung für das Erlernen einsatzbereit ist. Dabei ist der Sensor in einer Ausführungsform derart ausgebildet, dass dieser permanent Daten erfasst. In einer anderen Ausführungsform ist der Sensor ein- und ausschaltbar, sodass eine unterbrochene Datenerfassung realisiert ist. Das Ein- und Ausschalten erfolgt in einer Ausführungsform manuell, zum Beispiel durch Betätigung eines entsprechenden Signalgebers wie einem Knopfschalter oder dergleichen. In einer anderen Ausführungsform erfolgt die Erfassung beispielsweise bewegungsgesteuert oder lagegesteuert. So schaltet die Vorrichtung oder der Sensor je nach Bewegungsablauf sich ein oder aus. Dabei kann Auslöser für ein Einschalten und/oder ein Ausschalten eine Geschwindigkeit, eine Beschleunigung, eine Rotation, eine Höhenänderung oder dergleichen sein. Auch lässt sich die Vorrichtung bzw. der Sensor ferngesteuert ein- und ausschalten. In einer anderen Ausführungsform erfolgt das Ein- und/oder Ausschalten zeitgesteuert. So schaltet sich beispielsweise der Sensor zu einer bestimmten Zeit und/oder nach einem bestimmten Zeitablauf ein oder aus. Die Zeitsteuerung ist in einer Ausführungsform mit einer Bewegungssteuerung gekoppelt. So erfolgt in einer Ausführungsform ein Ein-/Ausschalten beispielsweise 10 Sekunden ohne Bewegung des Sensors.

Die Stromversorgung des Sensors erfolgt über eine entsprechende Energiequelle. Der Bewegungsablauf wird in einer Ausführungsform in einem Speicherbereich abgelegt. Der Speicherbereich ist in einer Ausführungsform als flüchtiger Speicher oder temporärer Speicher ausgebildet, der nach Übertragung der erfassten Daten gelöscht wird. In einer anderen Ausführungsform ist der Speicher als Permanentspeicher ausgebildet, in dem die Daten bis zu einem expliziten Löschsignal gespeichert bleiben, beispielsweise für eine spätere Auswertung.

Um eine Abweichung des Ist-Bewegungsablaufs von dem Sollbewegungsablauf zu ermitteln, ist ein Toleranzbereich oder ein Bereich für eine zulässige Abweichung zu definieren. Diese Abweichung kann zum Beispiel durch Durchführungen mehrerer Sollbewegung definiert werden. Ergänzend oder alternativ kann die Abweichung programmiert oder anders vorgegeben werden. Beispielsweise wird in einer Ausführungsform die Abweichung als Abweichung von Koordinaten bzw. Drehung um Koordinatenachsen definiert. Die Abweichung kann zum Beispiel in x, y und/oder z-Achse als prozentuale Abweichung definiert werden. Weiter kann in einer weiteren Ausführungsform die Abweichung über einen zulässigen Drehwinkel um die x, y und/oder z-Achse definiert werden. In wiederum einer anderen Ausführungsform ist die Abweichung als Abweichung von einer Geschwindigkeit und/oder Beschleunigung definiert. Beliebige Kombinationen sind zudem möglich.

In einem Vergleichsbereich werden die Daten des Ist-Bewegungsablaufs mit den Daten des Sollbewegungsablaufs verglichen, ggf. unter Berücksichtigung der Daten für eine Abweichung. Sofern die Abweichung innerhalb eines zulässigen Toleranzbereichs oder alternativ außerhalb eines zulässigen Toleranzbereichs liegt, wird eine entsprechende Aktion gestartet. Die Aktion sieht die Ausgabe eines Signals vor in Abhängigkeit von der Abweichung vor. Das Signal kann jedes beliebige Signal sein. Bevorzugt ist die Ausgabe eines akustischen Signals oder mehrere akustischer Signale. In anderen Ausführungsformen werden andere Signale ergänzend oder alternativ ausgegeben, beispielsweise optische Signale.

Der Vergleich und die Ausgabe des ausgegebenen Signals, beispielsweise eines akustischen Signals oder eines visuellen Signals, erfolgt in Echtzeit bzw. mit einer maximalen Verzögerungszeit von wenigen Millisekunden, beispielsweise in einem Bereich von weniger als 10 Millisekunden (ms), weiter bevorzugt von weniger als 5 ms und am meisten bevorzugt von weniger als 2 ms. Hierdurch bekommt ein Benutzer noch während der Ausführung des Bewegungsablaufs ein Feedback dazu, ob der von ihm ausgeführte Bewegungsablauf innerhalb eines Toleranzbereichs liegt, oder außerhalb. Aufgrund dieses Feedbacks ist es dem Benutzer noch während des Bewegungsablaufs möglich, ggf. diesen zu korrigieren.

Für den Vergleich der Ist-Daten mit den Soll-Daten ist mindestens ein Speicherbereich zum Definieren des Sollbewegungsablaufs bzw. den Daten zu dem Sollbewegungsablauf vorgesehen. Die Daten können Lagekoordinaten, Beschleunigungsdaten, Geschwindigkeitsdaten, Vibrationsdaten und/oder Rotationsdaten sein, sowie jegliche weitere Daten, die für eine Aufzeichnung von Bewegungsabläufen erforderlich sind. Die Daten des Sollbewegungsablaufs werden in dem entsprechenden Speicherbereich abgelegt und sind bei Bedarf später abrufbar, korrigierbar und oder überschreibbar. In diesem Speicher werden auch die Daten für die Abweichung abgelegt.

Weiter ist ein Speicherbereich zum Definieren des Ist-Bewegungsablaufs bzw. den Daten zu dem Ist-Bewegungsablauf vorgesehen. Die Daten können Lagekoordinaten, Beschleunigungsdaten, Geschwindigkeitsdaten, Vibrationsdaten und/oder Rotationsdaten sein, sowie jegliche weitere Daten, die für eine Aufzeichnung von Bewegungsabläufen erforderlich sind. Die Daten des Ist-Bewegungsablaufs werden in dem entsprechenden Speicherbereich abgelegt und sind bei Bedarf später abrufbar, korrigierbar und oder überschreibbar.

Weiter ist ein Vergleichsbereich vorgesehen. In dem Vergleichsbereich werden die Daten für den Ist-Bewegungsablauf mit den Daten für den Sollbewegungsablauf verglichen, wobei die Daten für die Abweichung berücksichtigt werden. Liegt der Ist-Bewegungsablauf bzw. dessen Daten innerhalb bzw. außerhalb eines zulässigen Bereichs, je nach Einstellung, wird ein Signal erzeugt. Es lässt sich einstellen, ob ein Signal erzeugt wird, wenn ein Toleranzbereich überschritten wird oder wenn die Daten des Ist-Bewegungsablaufs innerhalb des Toleranzbereichs liegen. Das Signal wird dann über einen entsprechenden Signalgeber oder eine andere Ausgabeeinheit ausgegeben. Die Ausgabeeinheit kann ein Lautspreche, ein Lichtsignalgeber oder ein anderer Signalgeber sein. In einer Ausführungsform sind mehrere Signalgeber vorgesehen, um so beispielsweise einen räumlichen Effekt zu erreichen.

In einer Ausführungsform sind die Speicherbereiche, der Vergleichsbereich und/oder die Ausgabeeinheit integriert ausgebildet. Beispielsweise sind die Bereiche und die Einheit in einer Ausführungsform als ein Mobiltelefon integriert ausgebildet. In anderen Ausführungsformen sind die Bereiche und die Einheit zumindest teilweise separat ausgebildet.

Um den Grad der Abweichungen des Ist-Bewegungsablaufs von dem Soll-Bewegungsablauf anzuzeigen, ist der Signalgeber bzw. die Ausgabeeinheit derart ausgebildet, dass der Grad der Abweichung in Form unterschiedlicher Signale bzw. variierender Signale ausgegeben wird. Die Signale selbst können unterschiedlicher Art sein, beispielsweise einmal als akustisches Signal und einmal als optisches Signal. In einer anderen Ausführungsform sind die Signale vom gleichen Typ und unterscheiden sich beispielsweise hinsichtlich ihrer Frequenz und/oder ihrer Intensität (Lautstärke, Helligkeit). Eine Dauer der Signale kann beliebig variieren. Beispielsweise erfolgt das Signal während des gesamten Bewegungsablaufs. In einer anderen Ausführungsform erfolgt das Signal während der gesamten Dauer der Abweichung vom Soll-Bewegungsablauf. In noch einer anderen Ausführungsform erfolgt ein Signal bereits vor und/oder nach dem Bewegungsablauf, beispielsweise um Betriebsbereitschaft anzuzeigen und/oder ein Feedback vor und/oder nach der ausgeführten Bewegung zu vermitteln. So kann das Signal als Erinnerungsfunktion oder als Belohnungssignal fungieren. Das Signal ist in einer Ausführungsform als ununterbrochenes Signal ausgebildet. In einer anderen Ausführungsform ist das Signal als unterbrochenes Signal ausgeführt. Eine Kombination ist ebenfalls möglich. Weiter können mehrere Signale durch die Signaleinheit ausgegeben werden, beispielsweise vor einem Bewegungsablauf ein unterbrochenes Signal und während des Bewegungsablaufs oder während einer Abweichung von dem Soll-Bewegungsablauf eine ununterbrochenes Signal. Auch hier sind verschiedene Kombinationen ausführbar. Die Variation des Signals erfolgt in einer Ausführungsform in Abhängigkeit von einer Geschwindigkeit und/oder Beschleunigung, mit welcher die Ist-Bewegung ausgeführt wird. Der mit dem Bewegungsablauf mitgeführte Sensor erfasst die entsprechenden Daten und es wird ein Signal erzeugt / ausgegeben, welches beispielsweise bei einer hohen Geschwindigkeit eine höhere Frequenz und/oder Lautstärke aufweist und bei einer niedrigeren Geschwindigkeit eine geringere Frequenz/Lautstärke oder Intensität. Das Signal wird in Abhängigkeit von der Abweichung des Sollbewegungsablaufs zu dem Ist-Bewegungsablaufs variiert. In einer Ausführungsform ist bei großer Abweichung ein lauteres und/oder höherfrequentes akustisches Signal zu hören als bei einer geringeren Abweichung. In einer anderen Ausführungsform ist die Situation umgekehrt, je nach Einstellung. Vorzugsweise ist das Signal ein akustisches Signal. Das Signal wird beispielsweise über eine Auswerteeinheit wie ein Mobiltelefon mit einer entsprechenden App generiert. Die Ausgabeeinheit ist vorzugsweise als akustische Ausgabeeinheit ausgebildet. Das Variieren des Signals erfolgt vorzugsweise kontinuierlich, das heißt ohne Frequenz- und/oder Intensitätssprünge. In einer anderen Ausführungsform erfolgt das Variieren des Signals nicht kontinuierlich, sondern beispielsweise in Sprüngen. Die Frequenzsprünge sind in einer Ausführungsform gleichmäßig, das heißt es erfolgt mit jedem Sprung eine entsprechende Frequenzänderung um den gleichen Betrag. In einer anderen Ausführungsform sind die Sprünge ungleichmäßig. Die Sprünge sind in einer Ausführungsform vorgegeben. In einer anderen Ausführungsform variieren die Sprünge. Vorzugsweise liegt ein Frequenzbereich der Signale in einem von dem Benutzer wahrnehmbaren Bereich. Bei einem akustischen Signal liegt der Frequenzbereich für menschliche Benutzer vorzugsweise zwischen etwa 20 Hz und 20kHz. Bei einem visuellen Signal liegt der Frequenzbereich des Signals oder der Signale vorzugsweise für einen menschlichen Benutzer in einem Bereich von etwa 789 THz bis 384 THz, das heißt in einem Lichtbereich mit Wellenlängen von etwa 380 nm bis etwa 780 nm. Für andere Benutzer können andere Frequenzen vorgesehen werden. Falls zusätzliche Empfänge eingesetzt werden, können andere für den jeweiligen Empfänger wahrnehmbare Frequenzen verwendet werden. Vorzugsweise werden die Abweichungen gruppiert und jeder Gruppierung ein unterschiedliches Signal zugeordnet. In einer Ausführungsform ist vorgesehen, dass das Signal variiert, wenn über mehrere Bewegungsabläufe bei gleichem Sollbewegungsablauf der Ist-Bewegungsablauf nicht näher an den Sollbewegungsablauf erfolgt, also die Abweichung nicht verringert wird. Einem Ist-Bewegungsablauf ist immer ein Sollbewegungsablauf zugeordnet. Der Ist-Bewegungsablauf kann mehrfach wiederholt werden, wobei der Sollbewegungsablauf gleichbleibt. Der Toleranzbereich um den Sollbewegungsablauf, das heißt der Bereich, in dem ein Ist-Bewegungsablauf noch als akzeptabel oder gleichzusetzten mit dem Sollbewegungsablauf gilt, ist einstellbar. Das Signal wird zumindest hinsichtlich eines Parameters variiert oder verändert. Vorzugsweise wird ein akustisches Signal hinsichtlich seiner Frequenz und/oder seiner Intensität variiert. Gleiches gilt für ein visuelles Signal oder eine Kombination aus visuellem und akustischem Signal.

Um möglichst genaue Daten über den Ist-Bewegungsablauf zu erhalten, ist der Sensor an entsprechenden Stellen an dem den Bewegungsablauf ausführenden Subjekt bzw. Objekt angeordnet. In einer Ausführungsform ist der Sensor an einem Schlägerkopf eines Schlaggeräts, beispielsweise einem Tennisschläger, einem Golfschläger oder dergleichen angeordnet. Aber auch eine Anordnung an einem Paddel, Ruder, Bogen oder anderen Sportgeräten ist denkbar. Auch lässt sich der Sensor direkt an dem Benutzer anbringen, zum Beispiel an dessen Haut an entsprechenden Muskelpartien, um deren Bewegungsablauf und den Bewegungsablauf des Benutzers insgesamt zu erfassen. In noch einer anderen Ausführungsform ist der Sensor an der Kleidung des Benutzers angeordnet. Der Sensor kann dabei separat an der Kleidung angeordnet werden oder bereits integriert in der Kleidung angebracht sein.

Die Vorrichtung kann als eine Signalvorrichtung, insbesondere einer Signalvorrichtung für ein Schlaggerät wie ein Tennisschläger, ein Golfschläger oder dergleichen, zur Signalerzeugung bei einer Bewegung der Signalvorrichtung ausgebildet sein. Die Signalvorrichtung umfasst einen Sensor, der eine Bewegung erfasst. Weiter ist eine Auswerteeinheit vorgesehen, welche elektrisch oder elektronisch ein Signal in Abhängigkeit von der Bewegung erzeugt. Um den Sensor an dem Schlaggerät anzubringen, umfasst die Signalvorrichtung eine Halteeinrichtung.

In einer anderen Ausführungsform ist vorgesehen, dass die Halteeinrichtung beispielsweise als Clips, Klammer oder dergleichen ausgebildet ist. Für ein Schlaggerät ist die Vorrichtung oder zumindest der Sensor in den Schläger eingebettet oder integriert mit diesem ausgebildet.

Über den Sensor lässt sich beispielsweise eine Schlaggeschwindigkeit in der Vertikalen bzw. in der Senkrechten/Frontalebene erfassen. Ein Schlaggeschwindigkeitsbereich richtet sich nach dem Können des jeweiligen Spielers. Trainierte Spieler schlagen mit einer höheren Schlaggeschwindigkeit, also in einem höheren Schlaggeschwindigkeitsbereich. Untrainierte Spieler schlagen mit einer geringeren Schlaggeschwindigkeit, also in einem niedrigeren Schlaggeschwindigkeitsbereich. Entsprechend ist eine Toleranzbereich bzw. eine Abweichung einstellbar oder programmierbar.

Die Vorrichtung ist in einer Ausführungsform als Schlaggerät, beispielsweise als Tennisschläger, Golfschläger, Hockeyschläger und dergleichen oder als Kleidungsstück ausgebildet, in welche der Sensor, die Bereiche integriert sind, ggf. auch die Ausgabeeinheit. In einer Ausführungsform weisen die Bauteile entsprechende Schnittstellen zur Kommunikation mit weiteren Bauteilen auf.

Ein System kann in einer Ausführungsform verschiedene Schläger umfassen, beispielsweise einen Tennisschläger, einen Golfschläger, einen Tischtennisschläger, einem Baseballschläger, einen Hockeyschläger oder dergleichen. In einer Ausführungsform umfasst das System ein Kleidungsstück. In das Kleidungsstück ist in einer Ausführungsform zumindest der Sensor integriert. Vorzugsweise ist ebenfalls eine Auswerteeinheit mit Speicherbereichen und Vergleichsbereich integriert ausgebildet. In einer Ausführungsform umfasst der Sensor die Speicherbereiche und den Vergleichsbereich sowie eine Übertragungsschnittstelle. Über die Übertragungsschnittstelle ist ein Signal übertragbar, beispielsweise an ein Mobiltelefon, welches dann ein Signal ausgeben kann.

In einer beispielhaften Ausführungsform umfasst das System ein als Tennisschläger ausgebildetes Schlaggerät. Ein Sensor ist an dem Schläger befestigt, Bevorzugt ist ein Sensor in dem Schläger, genauer dem Schlägerrahmen angeordnet. Der Schläger wird im Definitionsmodus auf den Boden gelegt. Wenn der Schläger in einer Ruhelage auf dem Boden liegt, wird diese als Referenz- oder Ruhelage definiert, beispielsweise in dem ein Knopf an dem Schläger und/oder dem Sensor gedrückt wird oder alternativ per Fernsteuerung, beispielsweise über eine App mittels Mobiltelefon oder dergleichen ein Signal übermittelt wird. Der Sensor weist hierzu eine entsprechende Empfangseinheit auf. Die Referenzlage wird in einer Ausführungsform über dessen Koordinatenerfassung als waagerechte Lage bzw. Ausgangs- oder Referenzlage definiert. Um einen Bewegungsbereich zu definieren, wann ein Signal wie ein Ton ausgegeben wird, sobald ein Ist-Bewegungsablauf einem Sollbewegungsablauf, ggf. unter Berücksichtigung von Abweichungen entspricht, wird ausgehend von der Referenzlage beispielsweise ein Winkelbereich definiert, in welchem der Ist-Bewegungsablauf noch im Toleranzbereich liegt. Hierzu ist zumindest die Erfassung des Bewegungsablaufs in X-Koordinatenrichtung erforderlich. Genauer werden zumindest die Bewegungsrichtung und/oder die Intensität der Bewegung in X-Achse erfasst und ausgewertet. In einer bevorzugten Ausführungsform wird ein Bewegungsvektor erfasst und/oder vorgegeben. Der Bewegungsvektor ist als ein Vektor ausgebildet, der bei Ausführung des Bewegungsablauf in einem Raum über einen vorbestimmten Zeitraum erfasst wird und der zumindest eine Komponente in eine x-Richtung und eine Komponente in y-Richtung und/oder z-Richtung umfasst, ausgehend von einer Ausgangs-X-Komponente. Der von der erfassten x-Ausgangskomponente in die erfasste x-y-Richtung, x-z-Richtung oder x-y-z-Richtung weisende Vektor wird auf die Daten aus dem Eichvorgang bezogen. Dies erfolgt, indem der Bewegungsvektor durch die Waagerechte in x und y- Richtung bei der Eichung (Referenzlage) dividiert wird. Das Auswerten erfolgt über den Vergleichsbereich. Dieser wird für alle erfassten Vektoren und/oder Bewegung durchgeführt. Durch Erfassung bzw. Vorgabe der Daten zumindest in Richtung der X-Achse lässt sich ein Schlag gegen einen Ball nach vorne sowie eine Ausholbewegung (nach hinten) definieren. Für eine Definition Vorhandschlag oder Rückhandschlag ist die Lage des Schlägers im Verlauf der Schlagbewegung zu erfassen. Beispielsweise neigt sich bei einem Schlag der Kopf bei rechtshändigem Benutzer nach rechts unten. Die Schlaghand, welche den Schläger hält, befindet sich näher am Körper als der Sensor (beispielsweise links vom Sensor von hinten betrachtet). Bei einem Rückhandschlag befindet sich die Schlaghand entsprechend auf der anderen Seite (im Beispiel rechts) vom Sensor. Zudem wird eine Neigung nach links erfasst. Über die entsprechende Erfassung der Neigung ist somit auch für den Sensor bzw. die Vorrichtung erfassbar, welcher Schlag - Vorhand oder Rückhand - geübt wurde. Es ist lediglich eine Eingabe Rechtshänder oder Linkshänder erforderlich. Die Vorrichtung weist eine entsprechende Eingabemöglichkeit auf. Bei Anwendung des Verfahrens wird die Eingabe Linkshänder/Rechtshänder entsprechend berücksichtigt. Durch Aufzeichnung des Bewegungsablaufs lässt sich auch ein Tracking realisieren.

Bevorzugt wird in der Ausführungsform ein Tonsignal ausgegeben. Die Art des Tonsignals kann gewählt werden, beispielsweise über das Computerprogramm (App) oder andere Eingabemöglichkeiten. Zudem kann eingestellt werden, ab wann der Ton ertönen soll, also beispielsweise in Abhängigkeit der Schlaggeschwindigkeit. Beispielsweise wird der Bereich, in welchem ein Ton oder ein anderes Signal ausgegeben werden soll, in Stufen vorgegeben oder vorprogrammiert. Der Benutzer kann dann zwischen verschiedenen Bereichen wählen, beispielsweise über das Computerprogramm (App). In anderen Versionen kann der Benutzer einen fließenden Übergang wählen oder Bereiche selber definieren. Nach einem Schlag kann in einen Mute-Modus geschaltet werden. Hierzu ist ein entsprechender Mute-Schalter vorgesehen, entweder am Sensor / der Vorrichtung oder aber softwaretechnisch über das Computerprogramm. In diesem Modus wird der Treffzeitpunkt aufgrund einer Änderung der Geschwindigkeit bzw. der Beschleunigung des Sensors bzw. des Schlägers im Treffzeitpunkt erkannt, zumindest in X-Richtung. Alternativ kann der Treffzeitpunkt durch Erkennung des Saitenbilds bei einem Aufprall des Balles erkannt werden. Bei Aktivierung des Mute-Modus verstummt der bis dahin ausgegebene Ton bzw. wird "gemutet".

Alternativ oder in Ergänzung kann mittels Tracking (Ortsverfolgung) erkannt, wie oft eine Vorhand, eine Rückhand, ein Serve oder ein anderer bestimmter zu erlernender Schlag den Sollbereich erreicht hat. Durch das mehrfache Erreichen des Sollbereichs kann die Abweichung oder ein geänderter Sollbereich vorgegeben werden. Hier lässt sich der Sensor bei Erreichen einer bestimmten Anzahl von Treffern (Erreichen des Sollbereichs) neu eichen/justieren bzw. der Toleranzbereich anpassen. Die Abweichung wird in einer Ausführungsform verringert. Das Verringern erfolgt in einer Ausführungsform symmetrisch zu einem Ursprungsbereich. In einer anderen Ausführungsform erfolgt die Anpassung asymmetrisch zu einem ursprünglichen Toleranzbereich bzw. einem vorgegebenen Abweichungsbereich. Das heißt, je nach dem, von welchem Rand des Sollbereichs die der Ist-Bewegungsablauf weiter entfernt ist, erfolgt die Anpassung stärken von dem weiter entfernten Rand aus. Der Bereich wird asymmetrisch verändert. Liegt der Ist-Bewegungsablauf etwa mittig in dem durch den Soll-Bewegungsablauf definierten Bereich, erfolgt eine symmetrische Veränderung der Ränder. Im letzten Fall werden beide Ränder etwa um den gleichen Betrag angepasst. In dem Asymmetrischen Fall wird nur ein Rand angepasst oder beide Ränder mit einem unterschiedlichen Betrag. Die Anpassung erfolgt bevorzugt selbsttätig, sodass eine selbstlernende Anpassung vorgesehen ist. Die Anpassung kann im Rahmen eines Lernprogramms erfolgen. Hier sind verschiedene Lektionen vorgesehen. Bei wiederholter Bewältigung einer Lektion wird dann beispielsweise eine weitere Lektion, zum Beispiel mit geringerem Abweichungsbereich abgerufen. Wird diese erfolgreich bewältigt, erfolgt die nächste Lektion mit wiederum engerem Abweichungsbereich. Wird eine Lektion nicht erfüllt, wird auf der aktuellen Stufe/Lektion verharrt oder ggf. auch eine Stufe/Lektion zurückgeschaltet. Aufgrund der erfassten Daten wir in einer Ausführungsform ein erzielter Drall auf den Ball ermittelt bzw. ausgegeben. Hierzu ist eine entsprechende Auswerteeinheit vorgesehen. Diese ermittelt aufgrund Schlaggeschwindigkeit, Schlagbeschleunigung und/oder Trackingdaten den Drall.

Bevorzugt ist in dem System vorgesehen, dass mittels eines Sensors und einer Auswerteeinheit, die beispielsweise über eine entsprechende Software oder ein Computerprogramm realisiert? ist, ein Signal bei Erreichen einer Sollbewegung ggf. unter Berücksichtigung einer Abweichung ausgegeben wird.

In einer anderen Ausführungsform ist vorgesehen, dass der Sensor in Form von Druck, Lage- und/oder Formsensoren ausgebildet ist. Diese werden in Kleidung, vorzugsweise Unterwäsche oder Longsleeves, Tights oder Shorts, integriert. Dabei sind die Sensoren vor allem im Schulterbereich, im Brustbereich und/oder im Wirbelsäulenbereich am Rücken vorgesehen. Andere Bereiche sind ebenfalls denkbar. Die Sensoren sind dabei flexibel ausgebildet und passen sich der aktuellen Körperhaltung an. Für die Anwendung nimmt der Benutzer eine Soll-Körperhaltung ein, insbesondere mit Rücken und/oder Schulter. Entsprechend nehmen auch die Sensoren diese Soll-Körperhaltung ein. Diese Soll-Körperhaltung, vergleichbar mit der Soll-Bewegungsablauf wird als Referenzlage definiert, ähnlich wie zuvor beschrieben. Die Sensoren erfassen nun den weiteren Bewegungsablauf. Anhand der vorbestimmten Abweichung in Verbindung mit dem Soll-Bewegungsablauf wird ein Vergleich durchgeführt. Bei entsprechender Abweichung und je nach Grad der Abweichung wird ein Signal ausgegeben. Vorzugsweise wird der Abweichungsgrad gruppiert und jeder Gruppe ein spezifisches Signal zugeordnet. Die Signale unterscheiden sich beispielsweise hinsichtlich Intensität und/oder Frequenz und sind in einer Ausführungsform auf frei wählbar bzw. einstellbar. Bei einem Bewegungsablauf, der kritisch ist, beispielsweise weil er in einem gesundheitsgefährdenden Bereich liegt, kann ein Warnsignal ausgegeben werden, welches beispielsweise nicht veränderlich ist.

Die Sensoren sind beispielsweise als Piezokristallstreifen ausgebildet, die in ein den elektrischen Strom nichtleitendes Material eingearbeitet sind, vorzugsweise in Streifenform. Diese Sensoren werden dann in die Kleidung, zum Beispiel in Unterwäsche, eingearbeitet, dort bevorzugt im Bereich der Wirbelsäule, der Schulterpartie oder nahe anderen Körperpartien. Da die Piezokristalle auf mechanischen Druck reagieren, geben diese bei einem aufgrund einer Ist-Bewegung resultierenden Druck auf diese einen elektrischen Reiz ab. Diese Reize sind messbar und werden beispielsweise mittels einer geeigneten Messeinrichtung erfasst. Die erfassten Daten werden dann an ein Computerprogramm oder eine andere Signaleinrichtung, beispielsweise ein Mobiltelefon mit entsprechender App, weitergegeben. Die Weitergabe erfolgt bevorzugt per Bluetooth, also drahtlos, kann in anderen Ausführungsformen aber auch drahtgebunden erfolgen. Ein entsprechendes Signal wird erzeugt. Statt Piezokristallen können auch Dehnungsstreifen verwendet werden, die streifenförmig oder nach Art eines Drahts ausgebildet sind und in Kleidung verarbeitet werden. Der Draht wird bei einem Ist-Bewegungsablauf entsprechend gedehnt oder gestaucht. Bei einer Dehnung oder Stauchung ändert sich die Leitfähigkeit des Dehnungsstreifens, welche erfasst wird. Die Veränderung der Leitfähigkeit wird entsprechend verarbeitet und ein korrespondierendes Signal wird ausgegeben. Noch eine andere Ausführungsform sieht vor, dass die Sensoren als eine Druckverteilungsfolie ausgebildet sind. Die Funktionsweise ist ähnlich wie vorstehend beschrieben. Aus einem erfassten Ist-Bewegungsablauf wird ein Signal generiert, welches nach Auswertung ein entsprechendes Signal, vorzugsweise einen Ton oder mehrere Töne, ausgibt.

Vorzugsweise ist vorgesehen, dass die Vorrichtung einen Sensor aufweist, der membranfrei ausgebildet ist. Der Sensor ist als Bewegungssensor ausgebildet, der Beschleunigungen, Bewegungen, Geschwindigkeiten, Lageänderungen und dergleichen vorzugsweise membranfrei erfasst. In einer Ausführungsform ist vorgesehen, dass die Vorrichtung frei von Ausgabeeinheiten ist, welche visuelle Signale ausgeben. In einer bevorzugten Ausführung gibt die Vorrichtung ausschließlich akustische Signale über die Ausgabeeinheit aus.

In einer Ausführungsform variiert das ausgegebene Signal während eines zu erlernenden Bewegungsablaufs. Bevorzugt variiert das Signal kontinuierlich während der Bewegung. In einer anderen Ausführungsform variiert das Signal sprunghaft, beispielsweise aufgrund einer Gruppierung von Bewegungsablaufdaten.

In einer weiteren bevorzugten Ausführungsform ist vorgesehen, dass das Verfahren und/oder die Vorrichtung bzw. das System selbstlernend ausgebildet ist.

In einer Ausführungsform wird eine Referenzbewegung bzw. ein Sollbewegungsablauf oder werden mehrere Referenzbewegungen bzw. Sollbewegungsabläufe aufgenommen, definiert und/oder im entsprechenden Speicherbereich abgelegt. Die Vergleichseinheit oder eine andere Auswerteeinheit, beispielsweise eine App oder ein entsprechendes anderes Computerprogramm ermittelt dann den aktuellen individuellen Stand des Benutzers, in dem mehrere Ist-Bewegungsabläufe analysiert werden bzw. zu Beginn ein Start-Bewegungsablauf des Benutzers bzw. des Schlägers analysiert wird. Die Auswerteeinheit oder eine andere Recheneinheit bildet aus den Soll- und Ist-Bewegungsabläufen eine Angleichungen und stellt eine passende Trainings-Stufe ein, je nach Können des Benutzers, d.h. je nach Grad der Abweichungen der Ist-Bewegungsabläufe von dem vorgegebenen Soll-Bewegungsablauf. Mit Hilfe der Daten, die von den Sensoren, hier den Beschleunigungssensoren, aufgezeichnet werden, wird ein Mittelwert gebildet. Der Mittelwert kann sowohl aus mehreren Sollbewegungsabläufen oder Referenzbewegungen und/oder aus mehreren Ist-Bewegungsabläufen gebildet werden.

Eine Ausführungsform eines Systems ist im Bereich Tennissport vorgesehen. Der mindestens eine Sensor wird an dem Schläger angeordnet. Es wird ein Referenzschlag oder es werden mehrere Referenzschläge durchgeführt, beispielsweise von einem Trainer. Alternativ werden gespeicherte Daten eines Referenzschlages eingespeist oder programmiert. Dann werden durch den jeweiligen Benutzer mehrere Ist-Bewegungsabläufe durchgeführt und deren Daten ermittelt. Aus den Daten wird ein Mittelwert errechnet. Die Daten liegen vorzugsweise als Vektordaten oder Vektorbewegungsdaten vor. Auf diese Weise wird beispielsweise das Niveau der Schwunggeschwindigkeit in X und Y Richtung des Vektors ermittelt. Die X-Richtung ist eine horizontale Richtung. Die Y-Richtung ist eine vorzugsweise rechtwinklig zu der X-Richtung ausgerichtete Richtung, vorzugsweise eine vertikale Richtung. Nach Auswertung der Daten und ggf. Bestimmung einer Abweichung der Daten der Soll-Bewegungsabläufe und der Ist-Bewegungsabläufe wird eine geeignete Stufe eingestellt. Das heißt, die Abweichung bzw. der Toleranzbereich wird entsprechend angepasst. In einer anderen Ausführungsform wird ein weiterer Teil eines Soll-Bewegungsablaufs freigeschaltet oder für die Erfassung des Ist-Bewegungsablaufs hinzugefügt. So lässt sich ein Fokus auf Teil-Bewegungsabläufe setzen und weitere Teile werden erst nach Beherrschung eines bestimmten Teil- oder auch Grund-Bewegungsablaufs erfasst. Für eine passende bzw. geeignete Stufe ist beispielsweise eine Begrenzung eines Minimums und/oder eines Maximums einer Beschleunigungserfassung bei einem Ist-Bewegungsablauf für eine X-Schwelle und/oder eine Y-Schwelle einer Beschleunigung zur Ausgabe eines akustischen Signals anpassbar. Eine Anpassung an verschiedene Trainingssteigerungen ist somit ohne Wechsel eines Sensors und/oder einer Signaleinheit möglich. Eine Vorauswahl einer bestimmten Einheit, wie bei einer Pfeife gemäß Stand der Technik, die nur für ein Trainingsniveau eingestellt ist, ist somit nicht erforderlich. Die Vorrichtung ist variable für unterschiedliche Benutzer auf unterschiedlichem Niveau einstellbar.

In einer anderen Ausführungsform ist/sind das System bzw. das Verfahren und/oder die Vorrichtung im Bereich Fitness vorgesehen.

Durch eine Vorgabe, vorzugsweise eine manuelle Vorgabe, eines Trainingsgewichts, wird eine zulässige Abweichung bzw. ein Toleranzbereich vordefiniert. Die Abweichung wird beispielsweise in Abhängigkeit eines Trainingsgewichts, so eines Gewichts einer Hantel oder dergleichen, eingestellt. Ein höheres Gewicht oder eine höhere Belastungsstufe durch ein Fitnessgerät bedeutet ein höheres Risiko für den Benutzer. Deshalb wird eine Abweichung bzw. der Toleranzbereich eng gesetzt bzw. vorgegeben. Neben einer Vorgabe hinsichtlich des Gewichts oder des Belastungsniveaus kann auch eine Vorgabe hinsichtlich der Anzahl der durchzuführenden Ist-Bewegungsabläufe vorgegeben werden. Dies gilt für sämtliche Ausführungsformen. Beispielsweise können bei einem Kreuzheben, aber auch bei allen anderen Anwendungen, mehrere Ist-Bewegungsabläufe erfasst werden und daraus eine Referenzbewegung ermittelt werden. Diese vorzugsweise gemittelte Referenzbewegung wird dann mit dem Sollbewegungsablauf verglichen. Aus dem Vergleich wird eine Abweichung von dem Sollbewegungsablauf erkannt bzw. ermittelt. Anhand der ermittelten Ist-Abweichung wird die vorgegebene Abweichung bzw. der vordefinierte Toleranzbereich angepasst, sodass gezielt die Abweichung beim Ist-Bewegungsablauf verringert wird. Die Anpassung der Soll-Abweichung bzw. des vorgegebenen Toleranzbereichs kann manuell oder auch anhand der ermittelten Daten seitens der Auswerteeinheit erfolgen. Mit diesem Verfahren ist die Erlernung einer Bewegung unabhängig von dem Leistungsniveau steuerbar, sodass beispielsweise im Bereich Fitness ein zu trainierender Bewegungsablauf mit kleinen Gewichten ebenso wie mit großen Gewichten trainierbar ist.

Das Verfahren ist vorzugsweise in einem Computerprogramm umgesetzt, insbesondere in einer App. Zusätzlich zum Trainieren der Bewegungsabläufe können aufgrund der Speicherbereiche und der geeigneten Sensoren auch Bewegungsabläufe gespeichert und getrackt werden. Beispielsweise können Gewichte, Wiederholungen und der gleichen mittels Tracking als Tracking-Daten abgelegt und abgerufen werden. Diese Tracking-Daten können dann in einer Ausführungsform für ein zeitlich beanstandetes Training bereitgestellt werden. So können individuelle Trainingsdaten an ein Gerät übermittelt werden, sodass das Gerät die entsprechende Belastung angepasst an den Benutzer einstellt und ein Benutzer nicht die Geräte manuell einstellen muss. Dabei kann beispielsweise nach einer erfolgten Überprüfung des Systems, ob die Ist-Bewegungsabläufe einer neuen Trainingseinheit mit den Daten zu den davor in einer anderen Trainingseinheit durchgeführten gespeicherten Bewegungsablaufdaten übereinstimmen, das Niveau also noch eingehalten ist und dann weitere Trainingsstufen bereitstellen (Gewichterhöhung, schnellere Ballgeschwindigkeit, mehr Wiederholungen, kürze Abfolge von Bewegungsabläufen etc.)

In einer anderen Ausführungsform ist das System für ein Sprinttraining vorgesehen. Der Ablauf ist ähnlich wie bei den vorherigen Verfahren. Es wird ein Referenzlauf erfasst oder es werden mehrere Referenzläufe erfasst. Ggf. wird ein Mittelwert gebildet und/oder aus den Referenzläufen ein Sollbewegungsablauf definiert. Beispielsweise wird die maximal erreichte Geschwindigkeit ermittelt. In einer anderen Ausführungsform wird zusätzlich und/oder alternativ eine Haltekurve der maximalen Geschwindigkeit ermitteln. Diese Daten werden beispielsweise in einem V-t-Diagramm, einem V-S-Diagramm, also als Verhältnis Geschwindigkeit zu Zeit und/oder Geschwindigkeit zur Strecke festgehalten. Die Daten lassen sich auch tabellarisch oder in anderer Form festhalten und ausgeben. Weitere Daten wie Zeiten, Zeiten bis zum Erreichen der maximalen Geschwindigkeit etc. können erfasst werden. Alternativ oder in Kombination können auch Teil-Bewegungsabläufe wie Armbewegung, Beinbewegung und dergleichen erfasst werden. Zum Trainieren können bestimmte Ziele eingestellt werden. Beispielsweise lässt sich der Sollbewegungsablauf vorgeben. Hierzu kann in Abhängigkeit von dem Referenzwert der Sollbewegungsablauf dahin vorgegeben werden, dass eine maximale Geschwindigkeit, ein Kniehub, ein Armbewegung, ein Haltezeit für die maximale Geschwindigkeit, eine Gesamtzeit und/oder eine Zeit bis zum Erreichen der maximalen Geschwindigkeit vorgegeben werden. Um den Sollbewegungsablauf lässt sich dann der Toleranzbereich bzw. die Abweichung vorgeben. Dieser kann asymmetrisch um den Sollbewegungsablauf eingestellt werden und kann in einer Ausführungsform einen nur nach oben oder unten verschobenen Bereich aufweisen. Beispielsweise kann der Sollbewegungsablauf als untere Grenze, die während der Ist-Bewegung zu überbieten ist, vorgegeben werden. In einem Fall würde die Vorrichtung dann ein Signal ausgeben, wenn eine maximale Geschwindigkeit nicht erreicht ist, sofern die maximale Geschwindigkeit überschritten ist, aber kein weiteres Signal ausgeben oder ein variiertes Signal ausgegeben. Hier wäre der Toleranzbereich nur nach oben, also hin zu höheren Geschwindigkeiten, eingestellt. In einer anderen Ausführungsform kann durch die Vorrichtung ein Vorschlag für das Trainieren von Teil-Bewegungsabläufen vorgeschlagen werden, beispielsweise ein Training mit höherem Kniehub, einer längeren Haltezeit der maximalen Geschwindigkeit oder dergleichen. So kann dann beispielsweise die maximale Geschwindigkeit niedriger gehalten werden aber dafür etwas länger gehalten werden. Hier sind verschiedene Kombinationen vorstellbar oder abrufbar. Um ein Überfordern des Benutzers zu vermeiden ist in einer Ausführungsform eine Überlast-Warnstufe vorgesehen.

In einer weiteren Ausführungsform werden neben den Sensordaten noch weitere Bezugsgrößen erfasst. In einer Ausführungsform werden Bezugsgrößen des Trainingsgelände oder des Umgebungsgelände erfasst. Bei einem Tennisplatz könnte dies beispielsweise ein Netz, eine Linie oder dergleichen sein. Bei Eiskunstlaufen oder Eishockey eine Bande. Bei anderen Sportarten entsprechend ein Korb, ein Tor, eine Tribüne, ein Hallendach, ein Kasten, eine Anzeigentafel und dergleichen. Die Erfassung kann über den Sensor erfolgen. Die Erfassung kann aber auch separat erfolgen, beispielsweise über eine separate Erfassungseinheit. Diese ist dann mit der Auswerteeinheit gekoppelt. Das Erfassen der externen Bezugsgrößen erfolgt beispielsweise optisch, sodass die Erfassungseinheit als optische Erfassungseinheit vorgesehen ist. Die Daten betreffend die externen Bezugsgrößen können auch programmiert oder anders vorgegeben werden. Die Bezugsgrößen können mit den Daten des Beschleunigungssensors korreliert werden, sodass zum Beispiel leicht berechenbar ist, ob ein Vorhandschlag oder ein Rückhandschlag durchgeführt wird.

In einer Ausführung ist ein Sensor vorgesehen, der mit einer externen Auswerteeinheit kommuniziert. Die vom Sensor erfassten Daten werden vorzugsweise drahtlos, beispielsweise per Funk, Bluetooth oder einer sonstigen drahtlosen Übertragungsmöglichkeit, zu der Auswerteeinheit gesendet. Die Auswerteeinheit kann als beliebige Hardwareeinheit mit entsprechender CPU, entsprechendem Speicher und dergleichen ausgebildet sein. Einstellbar, Bedienbar oder steuerbar ist die Auswerteeinheit entweder über eine integrierte Bedieneinheit und/oder über eine externe Einheit, beispielsweise ein Handy, ein Tablet, ein Notebook, per Sprachsteuerung oder dergleichen. Entsprechend der in der Auswerteeinheit bzw. deren Speicherbereichen vorgegeben Daten und dem Soll-Ist-Vergleich erzeugt die Auswerteeinheit ein Signal (optisch, visuell etc.). Die Auswerteeinheit ist vorzugsweise an einer Stelle angeordnet, in der wenig Hindernisse für eine Drahtlosdatenübertragung zu dem Sensor vorhanden sind. In einem Tennissystem ist der Sensor in und/oder an dem Sportgerät, dem Benutzer und/oder der Kleidung angebracht. Die Auswerteeinheit ist vorzugsweise an einem Tennisnetz angebracht. Um zu unterscheiden, ob ein zu erfassender Bewegungsablauf oder Teilbewegungsablauf vorliegt, werden verschiedene Parameter in der Auswerteeinheit berücksichtigt. Beispielsweise können die Lagedaten des Sensors oder eine Geschwindigkeit, eine Beschleunigung, eine Drehung oder dergleichen herangezogen werden. In dem Fall, in dem eine Geschwindigkeit herangezogen wird, ist eine Geschwindigkeitsschwelle vorgegeben. Andere Schwellwerte sind ebenfalls denkbar. Da ein Schlag regelmäßig mit einer höheren Geschwindigkeit als eine Ausholbewegung ausgeführt wird und die Ausholbewegung nicht erfasst werden soll, wird der Bewegungsablauf erst bei Erreichen einer vorgegebenen Geschwindigkeit erfasst. Es können mehrere Parameter kombiniert werden, beispielsweise Geschwindigkeit und Lage bzw. Bewegungsrichtung des Sensors. Bei einer Anordnung der Auswerteeinheit an einem Tennisnetz beispielsweise, kann die Auswerteeinheit Bewegung weg von der Auswerteeinheit leicht als Ausholbewegung klassifizieren und diese gegebenenfalls unberücksichtigt lassen. Bewegungen auf die Auswerteeinheit zu lassen sich beispielsweise als Schlag klassifizieren. Auf diese Weise werden weniger Daten für eine Auswertung erforderlich. Die Auswerteeinheit generiert dann das entsprechende Signal. Dieses kann direkt von der Auswerteeinheit ausgegeben werden. Alternativ oder in Kombination kann das Signal von einer externen oder separaten Ausgabeeinheit ausgegeben werden. Hierzu schickt die Auswerteeinheit ein entsprechendes Signal an die Ausgabeeinheit oder Ausgabeeinrichtung. Entsprechend weist die Auswerteeinheit und alle angeschlossenen oder zu verbindenden Einheiten korrespondierende Schnittstellen auf. Mögliche Schnittstellen sind neben Bluetooth, Funk auch optische Kabel und dergleichen. So kann eine Verbindung beispielsweise über eine AUX-Buchse und ähnliche erfolgen. Die Schnittstellen bzw. die Verbindungen sind derart ausgebildet, dass eine Echtzeit-Signalausgabe erfolgen kann. Es sind somit Ausgabezeiten mit weniger als 10ms möglich, vorzugsweise im Bereich von 1 ms. Das ausgegebene Signal wird dann entsprechend der Abweichung variiert. Eine Variierung des Signals umfasst nicht das Ein- und Ausschalten eines festen Signals, beispielsweise eines Lichts. Vielmehr umfasst eine Variation des Signals ein Verändern des eingeschalteten Signals insbesondere derart, dass diese Veränderung auch für einen Benutzer wahrnehmbar ist. Auch das Ein- und Ausschalten zweier verschiedener Lichtquellen, deren Signal an sich nicht veränderbar ist, ist nicht unter Variation des Signals oder der Signale zu versehen, da das jeweils ausgegebene Signal nicht variiert wird. Ein Ein- und Ausschalten verschiedener Signale, die nach Einschalten ein verändertes Signal, insbesondere ein wahrnehmbar verändertes Signal ausgeben, sind hingegen umfasst. Eine Variation kann beispielsweise auch durch ein Dimmen eines Lichtsignals realisiert werden.

Bei einer Ausführungsform der Signalvorrichtung für einen Tennisschläger funktioniert die Erfindung wie beschrieben.

Die Signalvorrichtung ist bevorzugt als eine Art Pfeife ausgebildet. Die Pfeife wird in die Schlägerspitze zwischen die Längssaiten geklemmt. Mit der Pfeife wird auf dem Fachgebiet Tennistraining diese als Trainingshilfe eingesetzt zum Erlernen eines Topspin-Schlags. Schon während des Spiels bzw. der Schlagbewegung erfolgt unmittelbar im Schlag ein direktes Feedback über die Drallstärke und korrekte Ausführung der Spins- unabhängig davon, ob es sich um einen Vor- oder Rückhand-Schlag handelt. Es erfolgt eine direkte/ unmittelbare Bewertung über einen Lernerfolg. Der Spieler bewertet selbständig über richtig und falsch aufgrund des erhaltenen Feedbacks. Der natürliche Lernprozess über den "Ist"-"Soll" Wert Vergleich, wird durch die direkte Bewertung des Topspin, anhand des Pfiffs bestärkt. Jeder Erfolg bei Bewegungsausführung wird sofort hörbar und somit nachhaltig erlernt. Das korrekte Bewegungsmuster des Vorhand- bzw. Rückhand-Topspin, wird durch die Aufgabe "Lass den Ton schon vor dem Ballkontakt ertönen" geschult. Es lassen sich unnötige Schläge über das Spielfeld auf Grund einer offenen Schlägerstellung vermeiden. Ein Ton ertönt nur bei korrekter Schlägerstellung. Der Spieler lernt über den Ton sofort, welcher Bewegungsablauf funktioniert.

Die Erfindung lässt sich zum Erlernen der korrekten Schlägerstellung verwenden. Nur bei der richtigen Schlägerstellung bzw. Bewegung pfeift durch den parallel zur Schlagfläche laufenden Luftstrom die Pfeife. Die Bewegung sieht einen Drehpunkt vor. Der Drehpunkt ist die Hand am Schlägergriff. Entsprechend muss die Schlägerspitze um diesen Drehpunkt rotieren für eine korrekte Bewegung. Für die richtige Bewegung ist der Bewegungsvektor in Y-Richtung entscheidend, wenn der Vektor in X-Richtung die Zuschlag-Richtung ist (vorwärts, parallel zum Boden). Bei offener Schlägerfläche erfolgt aufgrund der nicht korrekten Bewegung kein Pfiff. Nur eine Kombination aus Drehimpuls in Y-Richtung und richtige Schlägerstellung annähernd Senkrecht oder in Schlagrichtung geneigt erzeugt einen Signalton. Diese Funktionsweise ist nur durch Ausbildung der Signalvorrichtung als Helmholzresonator möglich. Durch die Ausbildung als Helmholzresonator lassen sich in Abhängigkeit von der Geschwindigkeit der Bewegung mindestens zwei unterschiedliche Signaltöne - hier Pfiffe - erzeugen, die ein Feedback über die Drallstärke wiedergeben. Bei einer Verwendung an einem Tennisschläger ertönt bei der Pfeife ein klarer, leiser Pfiff bei langsamer Geschwindigkeit, dann kein sauberer Ton, bis eine Schwelle wieder überschritten ist, dann ein lauter, sauberer Ton bis zu einem Limit. Beispielsweise ertönt bei einem Drallbereich der einer Ballrotation von etwa 500rpm-1000rpm entspricht ein leiser erster Ton; bei einem Drallbereich von etwa 1500-3000rpm ein lauter Ton, danach ertönt kein Ton mehr. Der Nutzen für den Benutzer ist, dass man den Spieler bewusst in einer Range halten kann. Nur dadurch ist es möglich den Spieler zu fordern und wichtiges Feedback zu geben. Immer pfeifen wäre nicht zu differenzieren für den Spieler.

Weitere, die Erfindung verbessernde Maßnahmen sind in den Unteransprüchen angegeben oder ergeben sich aus der nachfolgenden Beschreibung von mindestens einem Ausführungsbeispiel der Erfindung, welches in den Figuren schematisch dargestellt ist. Sämtliche aus den Ansprüchen, der Beschreibung oder der Zeichnung hervorgehenden Merkmale und/oder Vorteile, einschließlich konstruktive Einzelheiten, räumliche Anordnung und Verfahrensschritte können sowohl für sich als auch in den verschiedensten Kombinationen erfindungswesentlich sein. In den Figuren werden gleiche oder ähnliche Bauteile mit gleichen oder ähnlichen Bezugszeichen gekennzeichnet.

Es zeigen:
Fig. 1 schematisch eine längsgeschnittene Querschnittsansicht einer Ausführungsform einer Signalvorrichtung,
Fig.2 schematisch eine Draufsicht auf die Ausführungsform nach Fig. 1 und
Fig.3 schematisch eine Ausführungsform eines System zum Erlernen und/oder Verbessern von Bewegungsabläufen, insbesondere zum Erlernen und/oder Verbessern von Körperhaltungen und/oder Schlagbewegungen.

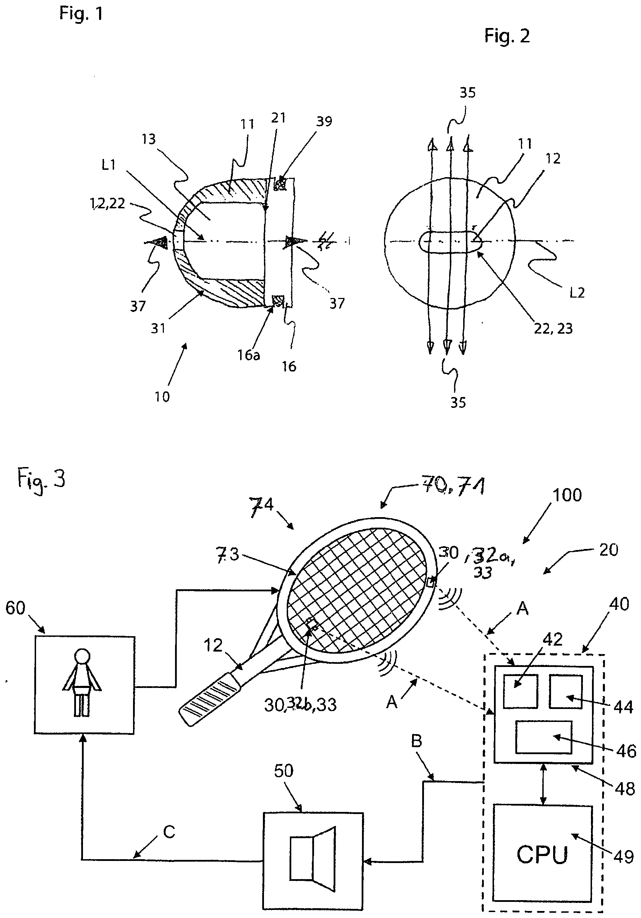

Die Fig. 1 und 2 zeigen in verschiedenen Ansichten und verschiedenen Detaillierungsgraden ein Ausführungsbeispiel der Erfindung. Fig. 1 zeigt schematisch eine längsgeschnittene Querschnittsansicht einer Ausführungsform einer Signalvorrichtung 10. Fig. 2 zeigt schematisch eine Draufsicht auf die Ausführungsform nach Fig. 1. Die Signalvorrichtung 10 umfasst einen Resonanzkörper 11. Weiter umfasst die Signalvorrichtung 10 eine Halteeinrichtung 16. Die Halteeinrichtung 16 und der Resonanzkörper 11 sind in der dargestellten Ausführungsform miteinander verbunden. In dem dargestellten Ausführungsbeispiel sind die Halteeinrichtung 16 und der Resonanzkörper 11 separat hergestellt und unlösbar miteinander verbunden. Über die Halteeinrichtung 16 lässt sich die Signalvorrichtung 10 an einem Gerät anbringen. In dem dargestellten Ausführungsbeispiel umfasst die Halteeinrichtung 16 eine seitlich umlaufende Nut 16a. Mit dieser lässt sich die Signalvorrichtung 10 beispielsweise zwischen zwei Tennisschlägersaiten 39 anbringen. Der Resonanzkörper 11 weist einen Hohlraum 13 auf. Dieser ist durch die Wandung 31 des Resonanzkörpers 11 gegenüber einer Umgebung abgegrenzt. In der Wandung 31 ist eine (einzige) Öffnung 12 vorgesehen. Über diese Öffnung 12 ist der Hohlraum 13 fluidisch mit der Umgebung verbunden. Der Hohlraum 13 ist an einer Endseite durch einen Boden 21 begrenzt. Dieser ist öffnungsfrei ausgebildet. An dem Boden 21 bzw. in den Boden 21 integriert ist die Halteeinrichtung 16 angeordnet. An einer anderen Endseite ist die Öffnung 12 ausgebildet. Zwischen den beiden Endseiten ist der Resonanzkörper 11 bzw. der Hohlraum 13 in Längsrichtung L1 ausgebildet. In einem gehaltenen Zustand ragt die Signalvorrichtung 10 somit mehr in Längsrichtung L1 zu der Öffnung 12, 22 als zu der anderen Endseite vor. Die Öffnung 10 ist etwa mittig endseitig an dem Resonanzkörper 11 ausgebildet. Dabei spannt sich der Resonanzkörper 11 etwa kuppelartig von dem Boden 12 zu der anderen Endseite auf. Der Resonanzkörper 11 ist dabei um die Längsachse L1 rotationssymmetrisch ausgebildet. Die Öffnung 12 ist hingegen um die Längsachse L1 nicht rotationssymmetrisch ausgebildet. In der dargestellten Ausführungsform ist die Öffnung 12 als Langloch 22 ausgebildet. Dabei ist das Langloch 22 mit dessen Längserstreckung L2 quer, bevorzugt senkrecht zu einem durch eine Soll-Schlagbewegung 37 hervorgerufenen Luftstrom 35 ausgerichtet. Der Luftstrom 35 erfolgt etwa senkrecht zu der Längserstreckung L2 der Öffnung 22 in eine Richtung oder in eine entgegengesetzte Richtung, beispielsweise im Falle einer Tennisschlagbewegung bei einer Rückhandbewegung oder einer Vorhandbewegung. Der Hohlraum 13 ist um die Längsachse L1 ebenfalls rotationssymmetrisch ausgebildet. Dabei ist der Hohlraum 13 im Wesentlichen zylindrisch mit einem abgerundeten Kuppelteil benachbart zu der Öffnung 12. Dadurch ist die Wandung des kuppelartigen Resonanzkörpers 11 im Bereich des Bodens 21stärker ausgebildet als in Längsrichtung L1 im Bereich der Öffnung 12. In Längsrichtung L1 ab der Höhe des Beginns des kuppelartigen Teils des Hohlraums 13 ist die Wandstärke des Resonanzkörpers 11 - mit Ausnahme der Öffnung 12, etwa konstant ausgebildet.

Die Signalvorrichtung 10 ist zur Befestigung an einem zwecks Beschleunigens eines Balles durch die Luft schwingbaren Sportgerät, insbesondere einem Tennisschläger vorgesehen. Dabei weist die Signalvorrichtung 10 den - bevorzugt kuppelartigen - Resonanzkörper 11 mit der als Langloch 22 ausgebildeten Öffnung 12 und den im Wesentlichen zylindrischen Hohlraum 13 auf, mit welchem ein akustisches Signal, vorzugsweise ein Pfeifton, als Ergebnis eines zur Längsachse L2 der Öffnung 12 im Wesentlichen senkrechten Luftstroms 35 erzeugbar ist. Die Signalvorrichtung 10 weist die Haltervorrichtung 16 auf, mit der der Resonanzkörper 11 lösbar derart an dem Sportgerät befestigbar ist, dass sich die Öffnung 12 im Wesentlichen quer zu der Soll-Bewegungsrichtung oder Soll-Schlagrichtung 37 des mit dem Sportgerät ausgeführten Schlages erstreckt.

Figur 3 zeigt schematisch eine Ausführungsform eines Systems 100 zum Erlernen und/oder Verbessern von Bewegungsabläufen, insbesondere zum Erlernen und/oder Verbessern von Körperhaltungen und/oder Schlagbewegungen. Das System 100 umfasst ein Schlaggerät 70, hier in Form eines Tennisschlägers 71. Weiter umfasst das System 100 eine Vorrichtung 20, welche Mittel zum Erlernen und/oder Verbessern von Bewegungsabläufen umfasst. Die Mittel umfassen zwei Sensoren 30. Diese sind beispielhaft an dem Tennisschläger 71 angeordnet. Ein erster Sensor 32a ist an einem Schlägerschaft 72 angeordnet. Ein zweiter Sensor 32b ist in dem Schlägerrahmen 73 an dem Schlägerkopf 74 angeordnet. Die Anordnung erfolgt dabei derart, dass eine Austarierung des Schlägers 71 nicht oder nicht wesentlich beeinflusst ist. Ggf. ist eine Tarierung, beispielsweise in Form von Gegengewichten vorgesehen, die hier nicht dargestellt sind. Vorzugsweise sind die Sensoren 30 nahe einer Schwerpunktachse des

Schlägers 71 vorgesehen. Die Sensoren 30 sind ausgebildet, eine Bewegung zu erfassen. Hierzu können die Sensoren 30 als Bewegungssensoren, Beschleunigungssensoren, Inertialsensoren oder dergleichen ausgebildet sein. Vorliegend sind die Sensoren 30 als Beschleunigungssensoren 33 ausgebildet. Die Sensoren 30 erfassen einen Bewegungsablauf des Schlägers 71 und somit des Sensors 30 selber. Die Daten über den Bewegungsablauf werden von den Sensoren 30 erfasst und an eine Auswerteeinheit 40 übertragen (dargestellt durch Pfeile A). Die Auswerteeinheit 40 umfasst mindestens einen ersten Speicherbereich 42 und mindestens einen zweiten Speicherbereich 44. Der erste Speicherbereich 42 ist zum Definieren eines Sollbewegungsablaufs und/oder einer zulässigen Abweichung von einem Sollbewegungsablauf ausgebildet. Diese sind in dem Speicher 42 abrufbar abgelegt. Der zweite Speicher 44 ist zum Ablegen des mittels der Sensoren 30 zu erlernenden oder zu verbessernden Ist-Bewegungsablaufs ausgebildet. Weiter ist ein Vergleichsbereich 46 vorgesehen. Der Vergleichsbereich 46 ist zum Vergleichen des Ist-Bewegungsablaufs mit dem Sollbewegungsablauf ausgebildet. Die Speicherbereiche 42, 44 und der Vergleichsbereich 46 sind in einem Bauteil 48 integriert ausgebildet. Weiter umfasst die Auswerteeinheit 40 in dem dargestellten Beispiel eine Recheneinheit 49. Über diese lassen sich die Daten und die Vergleiche entsprechend aufarbeiten, ein Computerprogramm durchführen und entsprechende Signale erzeugen. Die Recheneinheit 49 und das Bauteil 48 sind vorzugsweise integriert in der Auswerteeinheit 40 ausgebildet. Die Auswerteeinheit 40 gibt ein Signal an eine Ausgabeeinheit 50 weiter, wie durch den Pfeil B dargestellt. Die Ausgabeeinheit 50 ist vorliegend als Lautsprecher 51 ausgebildet. Dieser wandelt das übermittelte Signal in einen Klang oder Ton bzw. mehrere Töne oder Klänge, allgemein in ein akustisches Signal um. Dieses akustische Signal wird an einen Benutzer 60 weitergeleitet, dargestellt durch den Pfeil C. Der Benutzer 60 empfängt das Signal und passt den von ihm durchgeführten Bewegungsablauf an das empfangene Signal an. Ertönt kein Signal, ist keine Änderung erforderlich oder umgekehrt, ertönt kein Signal, ist eine Änderung erforderlich - je nach Anwendungsfall. Auf diese Weise entsteht ein Regelkreis, bei welchem der Benutzer 60 einen Bewegungsablauf schnell und komfortabel erlernt oder verbessert.

### Bezugszeichenliste

- 10: Signalvorrichtung
- 11: Resonanzkörper
- 12: Öffnung
- 13: Hohlraum
- 16: Halteeinrichtung
- 16a: Nut
- 21: Boden
- 22: Langloch
- 31: Wandung
- 35: Luftstrom
- 37: Soll-Schlagrichtung
- 39: Tennisschlägersaite
- L1: Längsrichtung
- L2: Längserstreckung
- 70: Schlaggerät
- 71: Tennisschläger
- 72: Schlägerschaft
- 73: Schlägerrahmen
- 74: Schlägerkopf
- 20: Vorrichtung
- 30: Sensor
- 32a: erster Sensor
- 32b: zweiter Sensor
- 33: Beschleunigungssensor
- 40: Auswerteeinheit
- 42: erster Speicherbereich
- 44: zweiter Speicherbereich
- 46: Vergleichsbereich
- 48: Bauteil
- 49: Recheneinheit
- 50: Ausgabeeinheit
- 60: Benutzer
- 100: System
- A: Pfeil A (Übertragung)
- B: Pfeil B (Signalweitergabe)
- C: Pfeil C (Signalweitergabe)

## Patentansprüche

1. Signalvorrichtung (10) für ein Schlaggerät (70) wie ein Tennisschläger, ein Golfschläger, einer Person oder eine Bekleidung der Person, zur Signalerzeugung bei einer Ist-Bewegung der Signalvorrichtung (10),
wobei die Signalvorrichtung (10) zum Ausgeben mindestens eines Signals in Abhängigkeit von dem Ist-Bewegungsablaufs ausgebildet ist, wobei die Signalvorrichtung (10) derart ausgebildet ist, dass eine Ausgabe des Signals während des Bewegungsablaufs erfolgt, sodass eine Rückkopplung auf den Ist-Bewegungsablauf ggf. noch während des Bewegungsablaufs erfolgt und wobei die Signalvorrichtung (10) derart ausgebildet ist, dass das ausgegebene Signal in Abhängigkeit von der Ist-Bewegung zumindest hinsichtlich Intensität, Zeit oder Frequenz variiert, **dadurch gekennzeichnet, dass**
die Signalvorrichtung (10) einen Resonanzkörper (11) und eine Halteeinrichtung (16) umfasst, wobei der Resonanzkörper (11) und die Halteeinrichtung (16) miteinander verbunden oder miteinander verbindbar ausgebildet sind, um den Resonanzkörper (11) über die Halteeinrichtung (16) an einem Schlaggerät (70) zu befestigen, wobei der Resonanzkörper (11) weiter einen Hohlraum (13) zur Erzeugung eines akustischen Signals bei einer Bewegung aufweist, wobei der Resonanzkörper (11) eine einzige Öffnung (12) aufweist, welche mit dem Hohlraum (13) in fluidischer Wirkverbindung steht und über welche der Hohlraum (13) mit der Umgebung fluidisch verbunden ist, wobei der Hohlraum (13) von einer Wandung des Resonanzkörpers (11) und dem Boden (21) des Resonanzkörpers (11) umgeben ist, wobei der Boden (21) öffnungsfrei ausgebildet ist, wobei die Signalvorrichtung (10) lediglich Teile aufweist, die nicht kippbar, drehbar oder anders relativ zu der Umgebung, beispielsweise mittels Gelenken, Lagern verdreh- oder verschwenkbar sind, wobei der Resonanzkörper (11) kuppelartig ausgebildet ist, wobei die Öffnung (12) an der Spitze des kuppelartigen Resonanzkörpers (11) ausgebildet ist.

2. Gerät oder Bekleidungsstück, nämlich ein Schlaggerät (70) oder ein Sportbekleidungsstück, zum Durchführen einer Bewegung, wie ein Tennisschläger, ein Golfschläger, eine Tischtennisschläger, ein Baseballschläger oder Sportunterwäsche, oder Trikots, **dadurch gekennzeichnet, dass** das Gerät oder das Bekleidungsstück mindestens eine Signalvorrichtung (10) nach Anspruch 1 aufweist.

3. Verfahren zum Erlernen oder Verbessern von Ist-Bewegungsabläufen, insbesondere zum Erlernen oder Verbessern von Körperhaltungen oder Schlagbewegungen, umfassend die Schritte:
Vorsehen mindestens einer Signalvorrichtung (10) nach Anspruch 1 und
Ausgeben mindestens eines Signals in Abhängigkeit von dem Ist-Bewegungsablauf, wobei eine Ausgabe des Signals während des Bewegungsablaufs erfolgt, sodass eine Rückkopplung auf den Ist-Bewegungsablauf ggf. noch während des Bewegungsablaufs erfolgt und wobei das ausgegebene Signal in Abhängigkeit von der Ist-Bewegung zumindest hinsichtlich Intensität, Zeit oder Frequenz variiert wird.

4. Verfahren nach Anspruch 3, wobei weiter die Schritte umfasst sind:
Vorsehen eines Sensors (30) zum Erfassen mindestens eines Teils einer Bewegung,
Definieren eines Sollbewegungsablaufs oder einer zulässigen Abweichung von einem Sollbewegungsablauf,
Erfassen des zu erlernenden oder zu verbessernden Ist-Bewegungsablaufs mittels des mindestens einen Sensors (30),
Vergleich des Ist-Bewegungsablaufs mit dem Sollbewegungsablauf und
Ausgabe mindestens eines Signals in Abhängigkeit von einer Abweichung des Ist-Bewegungsablaufs von dem Sollbewegungsablauf, wobei die Ausgabe des Signals während des Bewegungsablaufs erfolgt, sodass eine Rückkopplung auf den Ist-Bewegungsablauf ggf. noch während des Bewegungsablaufs erfolgt und
wobei das ausgegebene Signal in Abhängigkeit von einer Abweichung des Ist-Bewegungsablaufs von dem Sollbewegungsablauf zumindest hinsichtlich Intensität, Zeit oder Frequenz variiert.

5. Verwendung einer Signalvorrichtung nach Anspruch 1 oder eines Geräts oder Bekleidungsstücks nach Anspruch 2 zum Erlernen oder Verbessern von Bewegungsabläufen von Körperhaltungen oder Schlagbewegungen, wobei ein Feedback zu einer Abweichung eines Ist-Bewegungsablaufs zu einem Sollbewegungsablaufs noch während des Bewegungsablaufs erfolgt.

6. Computerprogramm umfassend mindestens eine Signalvorrichtung (10) nach Anspruch 1 und Programmcodemittel zum Durchführen aller Schritte gemäß Anspruch 3, wenn das Programm auf einem Computer ausgeführt wird.

7. Computerprogrammprodukt umfassend eine Signalvorrichtung (10) und Programmcodemittel, die auf einem computerlesbaren Medium gespeichert sind, um das Verfahren gemäß Anspruch 3 durchzuführen, wenn das Programm in einem Computer läuft.

8. System (100) zum Erlernen oder Verbessern von Bewegungsabläufen, umfassend
Mittel zur Durchführung des Verfahrens nach Anspruch 3, nämlich mindestens eine Signalvorrichtung (10) nach Anspruch 1 oder
ein Gerät nach Anspruch 2 sowie
ein Computerprogramm nach Anspruch 6 und/oder ein Computerprogrammprodukt nach Anspruch 7,
wobei der durchgeführte Bewegungsablauf mittels eines an einem Schlaggerät (10) wie einem Tennisschläger (11), einem Golfschläger oder einem anderen Sportschläger oder Sportgerät oder an einem Kleidungsstück oder einem Benutzer angebrachten Sensor (30) erfasst wird und ein in Abhängigkeit von dem mittels Sensor erfassten Bewegungsablauf generiertes akustisches Signal während des Bewegungsablaufs ausgegebene wird, so dass auditorische Re-afferenzen verfügbar gemacht werden, die dann als Online-Feedback genutzt werden können.

## Claims

1. A signaling device (10) for a sports apparatus (70) such as a tennis racket, a golf club, of a person or of an item of clothing of the person, for generating signals in the event of an actual movement of the signaling device (10),
wherein the signaling device (10) is configured to output at least one signal as a function of the actual sequence of movements, wherein the signaling device (10) is configured such that an output of the signal occurs during the sequence of movements, so that a feedback about the actual sequence of movements occurs if necessary during the sequence of movements and wherein the signaling device (10) is configured such that the output signal varies as a function of the actual movement at least with respect to intensity, time or frequency, **characterized in that**
the signaling device (10) comprises a resonance body (11) and a holding device (16), wherein the resonance body (11) and the holding device (16) are configured to be connected to each other or to be connectable to each other, in order to fasten the resonance body (11) to a sports apparatus (70) via the holding device (16), wherein the resonance body (11) has further a cavity (13) for generating an acoustic signal in the event of a movement, wherein the resonance body (11) has a single opening (12), which is fluidically connected to the cavity (13) and via which the cavity (13) is fluidically connected to the surrounding area, wherein the cavity (13) is enclosed by a wall of the resonance body (11) and the base (21) of the resonance body (11), wherein the base (21) is configured to be without an opening, wherein the signaling device (10) has only parts that are not tiltable, rotatable or otherwise, relative to the surrounding area, for example not rotatable or pivotable by means of joints, bearings, wherein the resonance body (11) is configured to be dome-shaped, wherein the opening (12) is configured on the tip of the dome-shaped resonance body (11).

2. An apparatus or item of clothing, namely a sports apparatus (70) or a sportswear item, for performing a movement, such as a tennis racket, a golf club, a table tennis paddle, a baseball bat or sports underwear, or jerseys, **characterized in that** the apparatus or the item of clothing has at least one signaling device (10) according to claim 1.

3. A method for learning or improving actual sequences of movement, in particular for learning or improving postures or striking movements, comprising the steps: providing at least one signaling device (10) according to claim 1 and outputting at least one signal as a function of the actual sequence of movements, wherein an output of the signal occurs during the sequence of movements, so that a feedback about the actual sequence of movements occurs if necessary during the sequence of movements and wherein the output signal is varied as a function of the actual movement at least with respect to intensity, time or frequency.

4. The method according to claim 3, wherein further the steps are comprised:
providing a sensor (30) for detecting at least a portion of a movement,
defining a target sequence of movements or a reliable deviation from a target sequence of movements,
detecting the actual sequence of movements to be learned or improved by means of the at least one sensor (30),
comparison of the actual sequence of movements with the target sequence of movements and outputting at least one signal as a function of a deviation of the actual sequence of movements from the target sequence of movements, so that a feedback about the actual sequence of movements if necessary occurs during the sequence of movements and wherein the output signal varies as a function of a deviation of the actual sequence of movements from the target sequence of movements at least with respect to intensity, time or frequency.

5. The use of a signal device according to claim 1 or of an apparatus or an item of clothing according to claim 2 to learn or improve sequences of movements of postures or striking movements, wherein a feedback occurs about a deviation of an actual sequence of movements to a target sequence of movements during the sequence of movements.

6. A computer program comprising at least a signaling device (10) according to claim 1 and program coding means for carrying out all steps according to claim 3, when the program is executed on a computer.

7. A computer program product, comprising a signal device (10) and program coding means, which are stored on a computer readable medium, in order to carry out the method according to claim 3, when the program is running on a computer.

8. A system (100) for learning or improving sequences of movements, comprising means for carrying out the method according to claim 3, namely at least a signaling device (10) according to claim 1 or an apparatus according to claim 2 as well as a computer program according to claim 6 and/or a computer program product according to claim 7, wherein the sequence of movements carried out is detected by means of a sensor (30) mounted on a sports apparatus (10) such as a tennis racket (11), a golf club or another sports apparatus or sports implement or on an item of clothing or a user and an acoustic signal generated as a function of the sequence of movements detected by means of the sensor is output during the sequence of movements, so that auditory reafferences are made available, which can then be used as online feedback.

## Revendications

1. Dispositif de signalisation (10) pour un appareil de frappe (70) tel qu'une raquette de tennis, un club de golf, d'une personne ou un habillement de la personne, pour la génération de signal lors d'un mouvement réel du dispositif de signalisation (10),
dans lequel le dispositif de signalisation (10) est réalisé pour l'émission d'au moins un signal en fonction de la séquence de mouvement réel, dans lequel le dispositif de signalisation (10) est réalisé de telle sorte qu'une émission du signal s'effectue pendant la séquence de mouvement, de sorte qu'une rétroaction sur la séquence de mouvement réel s'effectue éventuellement encore pendant la séquence de mouvement et dans lequel le dispositif de signalisation (10) est réalisé de telle sorte que le signal émis varie en fonction du mouvement réel au moins en ce qui concerne l'intensité, le temps ou la fréquence, **caractérisé en ce que**
le dispositif de signalisation (10) comprend un corps de résonance (11) et un système de retenue (16), dans lequel le corps de résonance (11) et le système de retenue (16) sont reliés l'un à l'autre ou réalisés de manière à pouvoir être reliés l'un à l'autre, afin de fixer le corps de résonance (11) sur un appareil de frappe (70) par l'intermédiaire du système de retenue (16), dans lequel le corps de résonance (11) présente en outre une cavité (13) pour la génération d'un signal acoustique lors d'un mouvement, dans lequel le corps de résonance (11) présente une seule ouverture (12), laquelle est en liaison fonctionnelle fluidique avec la cavité (13) et par l'intermédiaire de laquelle la cavité (13) est en liaison fluidique avec l'environnement, dans lequel la cavité (13) est entourée par une paroi du corps de résonance (11) et le fond (21) du corps de résonance (11), dans lequel le fond (21) est réalisé de manière exempte d'ouvertures, dans lequel le dispositif de signalisation (10) présente uniquement des parties qui peuvent être amenées en rotation ou pivoter sans pouvoir basculer, tourner ou autre par rapport à l'environnement, par exemple au moyen d'articulations, de paliers, dans lequel le corps de résonance (11) est réalisé à la façon d'une coupole, dans lequel l'ouverture (12) est réalisée sur la pointe du corps de résonance (11) du type coupole.

2. Appareil ou vêtement, à savoir appareil de frappe (70) ou vêtement de sport, pour la réalisation d'un mouvement, tel qu'une raquette de tennis, un club de golf, une raquette de tennis de table, une batte de baseball ou un sous-vêtement de sport, ou des maillots, **caractérisé en ce que** l'appareil ou le vêtement présente au moins un dispositif de signalisation (10) selon la revendication 1.

3. Procédé pour l'apprentissage ou l'amélioration de séquences de mouvement réel, en particulier pour l'apprentissage ou l'amélioration de postures ou mouvements de frappe, comprenant les étapes :
de prévision d'au moins un dispositif de signalisation (10) selon la revendication 1 et
d'émission d'au moins un signal en fonction de la séquence de mouvement réel, dans lequel une émission du signal s'effectue pendant la séquence de mouvement, de sorte qu'une rétroaction sur la séquence de mouvement réel s'effectue éventuellement encore pendant la séquence de mouvement et dans lequel le signal émis varie en fonction du mouvement réel au moins en ce qui concerne l'intensité, le temps ou la fréquence.

4. Procédé selon la revendication 3, dans lequel en outre les étapes sont comprises :
la prévision d'un capteur (30) pour la détection d'au moins une partie d'un mouvement,
la définition d'une séquence de mouvement théorique ou d'un écart admissible par rapport à une séquence de mouvement théorique,
la détection de la séquence de mouvement réel à apprendre ou à améliorer au moyen de l'au moins un capteur (30),
la comparaison de la séquence de mouvement réel à la séquence de mouvement théorique et
l'émission d'au moins un signal en fonction d'un écart de la séquence de mouvement réel par rapport à la séquence de mouvement théorique, dans lequel l'émission du signal s'effectue pendant la séquence de mouvement, de sorte qu'une rétroaction sur la séquence de mouvement réel s'effectue éventuellement encore pendant la séquence de mouvement et dans lequel le signal émis varie en fonction d'un écart de la séquence de mouvement réel par rapport à la séquence de mouvement théorique au moins en ce qui concerne l'intensité, le temps ou la fréquence.

5. Utilisation d'un dispositif de signalisation selon la revendication 1 ou d'un appareil ou vêtement selon la revendication 2 pour l'apprentissage ou l'amélioration de séquences de mouvement de postures ou mouvements de frappe, dans laquelle un retour concernant un écart d'une séquence de mouvement réel par rapport à une séquence de mouvement théorique s'effectue encore pendant la séquence de mouvement.

6. Programme informatique comprenant au moins un dispositif de signalisation (10) selon la revendication 1 et des moyens de code de programme pour la mise en œuvre de toutes les étapes selon la revendication 3, lorsque le programme est exécuté sur un ordinateur.

7. Produit-programme informatique comprenant un dispositif de signalisation (10) et des moyens de code de programme, qui sont mis en mémoire sur un support lisible par ordinateur, afin de mettre en œuvre le procédé selon la revendication 3, lorsque le programme tourne dans un ordinateur.

8. Système (100) pour l'apprentissage ou l'amélioration de séquences de mouvement, comprenant
des moyens pour la mise en œuvre du procédé selon la revendication 3, à savoir au moins un dispositif de signalisation (10) selon la revendication 1 ou un appareil selon la revendication 2 ainsi qu'un programme informatique selon la revendication 6 et/ou un produit-programme informatique selon la revendication 7,
dans lequel la séquence de mouvement réalisée est détectée au moyen d'un capteur (30) monté sur un appareil de frappe (10) tel qu'une raquette de tennis (11), un club de golf ou un autre dispositif de frappe de sport ou appareil de sport ou sur un vêtement ou un utilisateur et un signal acoustique généré en fonction de la séquence de mouvement détectée au moyen du capteur est émis pendant la séquence de mouvement, de sorte que des réafférences auditives sont rendues disponibles, qui peuvent alors être utilisées comme retour en ligne.
